(19) Europäisches Patentamt
European Patent Office
Office européen des brevets

(11) **EP 0 711 976 B1**

## (12) EUROPÄISCHE PATENTSCHRIFT

(45) Veröffentlichungstag und Bekanntmachung des Hinweises auf die Patenterteilung:
**04.07.2001   Patentblatt 2001/27**

(51) Int Cl.[7]: **G01D 3/028**

(21) Anmeldenummer: **94117802.2**

(22) Anmeldetag: **11.11.1994**

(54) **Anordnung zur Linearisierung und Temperaturkompensation von Sensorsignalen**

Arrangement for linearization and temperature compensation of sensor signals

Arrangement de linéarisation et compensation de température des signaux de capteur

(84) Benannte Vertragsstaaten:
**AT CH DE DK ES FR GB IT LI NL**

(43) Veröffentlichungstag der Anmeldung:
**15.05.1996   Patentblatt 1996/20**

(73) Patentinhaber:
- **ENDRESS + HAUSER GMBH + CO.**
  **D-79689 Maulburg (DE)**
- **KAVLICO CORPORATION**
  **Moorpark, CA 93021 (US)**
- **VEGA Grieshaber KG**
  **77709 Wolfach (DE)**

(72) Erfinder:
- **Schneider, Dr. Georg**
  **76650 Schopfheim (DE)**
- **Wagner, Richard**
  **76618 Rheinfelden (DE)**

- **Seesink, Petrus H.**
  **5685 AG Best (NL)**
- **Mellert, Martin**
  **77790 Steinach (DE)**

(74) Vertreter: **Morstadt, Volker, Dipl.-Ing. et al**
**Endress + Hauser**
**Zentrale Patentabteilung**
**Postfach 2222**
**79574 Weil am Rhein (DE)**

(56) Entgegenhaltungen:
**WO-A-91/05222          DE-A- 4 416 068**

- **PATENT ABSTRACTS OF JAPAN vol. 9 no. 16 (P-329) [1739] ,23.Januar 1985 & JP-A-59 163515 (YOKOGAWA HOKUSHIN DENKI KK)**

**Beschreibung**

Die Erfindung beschäftigt sich mit der Linearisierung und Temperatur-Kompensation von Sensorsignalen kapazitiver Sensoren, da deren Kapazität üblicherweise nichtlinear vom Meßeffekt, z.B. einem Druck, und außerdem noch von der Temperatur abhängig ist.

Kapazitive Sensoren dienen z.B. als kapazitive Drucksensoren zur Messung von Druck oder als kapazitive Feuchtesensoren zur Feuchtemessung, aber auch die Messung der von einer Karman'schen Wirbelstraße in Wirbeldurchflußmessern entstehenden Druckänderungen ist bekanntlich mit kapazitiven Sensoren möglich.

In der US-A 52 57 210 ist umfassend beschrieben, wie fehlerhafte Anteile des Meßeffekts linearisiert und kompensiert werden können. Das Prinzip dieser Linearisierung und dieser Kompensation beruht darauf, zunächst aus dem Meßeffekt ein elektrisches Signal, im folgenden immer mit Sensorsignal bezeichnet, zu erzeugen und erst anschließend ein von einem weiteren Sensor pro jeweilige Störgröße erzeugtes Störsignal auf das Sensorsignal aufzuschalten.

In den die kapazitiven Drucksensoren mit einem Meß- und einem Referenz-Kondensator betreffenden Ausführungsbeispielen der US-A 52 57 210 werden daher die Störsignale erst in auf den Meß- und den Referenz-Kondensator folgenden Stufen zusammen mit den Sensorsignalen zu deren Linearisierung und Temperatur-Kompensation durch quantisierten Ladungstransport mittels geschalteter Kapazitäten weiterverarbeitet.

Hierzu sind beispielsweise mehrere Funktionseinheiten vorgesehen, die von Taktsignalen angesteuert werden, die, ausgehend von einem Grundtakt, dessen vierzig-fache Periodendauer aufweisen. Die Funktionseinheiten sind recht aufwendig, so daß die Gesamtzahl der dafür benötigten Komponenten beträchtlich ist. Auch müssen erst diese vierzig Grundtakt-Perioden verstrichen sein, bevor das kompensierte und gewünschte geglättete Ausgangssignal der vorbeschriebenen Anordnung von ihr erzeugt worden ist.

Eine Aufgabe der Erfindung besteht daher in der Schaffung einer Anordnung, die wesentlich weniger Komponenten als die vorbeschriebene Anordnung benötigt und bei der das kompensierte geglättete Ausgangssignal auch schneller als bei der vorbeschriebenen Anordnung erhalten wird.

Zur Lösung dieser Aufgabe besteht die Erfindung daher in einer Anordnung zur Linearisierung und zur Temperatur-Kompensation von Sensorsignalen kapazitiver Sensoren, die umfaßt:

- einen Meß-Kondensator
- einen die Temperatur des Meß-Kondensators messenden, zwischen einem Betriebspotential und einem ersten Referenzpotential, insb. dem Schaltungsnullpunkt, liegenden temperatur-abhängigen Spannungsteiler mit einem resistiven Temperatursensor,
- eine auf den Meß-Kondensator und einen Referenz-Kondensator mittels Analogsignalen einwirkende, getaktete Einstellschaltung des Ausgangssignals der Anordnung,

-- wobei ein erster Eingang der Einstellschaltung am Betriebspotential und ein zweiter Eingang der Einstellschaltung am Temperatursensor liegt,

- eine an den Meß-Kondensator und den Referenz-Kondensator getaktet angeschlossene erste Integrierstufe,

-- deren Ausgang mit einem dritten Eingang der Einstellschaltung verbunden ist und der Ausgang der Anordnung ist, und

- einen Taktgenerator,

-- wobei das Ausgangssignal, S, folgender Gleichung gehorcht:

$$S = \frac{U \cdot [a_0 + a_1 \cdot v_t + (a_2 + a_3 \cdot v_t) \cdot C_V]}{b_0 + b_1 \cdot C_V},$$

--- worin bedeuten:
$C_V$ eines der folgenden Kapazitätsverhältnisse:

$C_{V1} = (C_m - C_r)/C_m,$
$C_{V2} = (C_m - C_r)/(C_m + C_r)$ oder
$C_{V3} = (C_m - C_r)/C_r;$
$C_m$ die Kapazität des Meß-Kondensators,

$C_r$      die Kapazität des Referenz-Kondensators,

U      das Betriebspotential,

$a_0$      einen Nullpunkt-Einstellwert,

$a_1$      einen Temperaturkoeffizient-Einstellwert des Nullpunkts,

$a_2$      einen ersten Spanne-Einstellwert,

$a_3$      einen Temperaturkoeffizient-Spanne-Einstellwert,

$b_0$      einen zweiten Spanne-Einstellwert,

$b_1$      einen Linearisierungs-Einstellwert und

$v_t$      das temperatur-abhängige Widerstandsverhältnis des Spannungsteilers.

In Ausgestaltung der Erfindung kann die Integrierstufe einen ersten Integrator mit einem getaktet umzupolenden Kondensator und einen am Ausgang des ersten Integrators getaktet liegenden zweiten Integrator enthalten.

In anderer Ausgestaltung der Erfindung kann die Einstellschaltung umfassen:

-    einen ersten, ein positives und ein negatives Wandlersignal abgebenden Digital/Analog-Wandler,

   --    dessen Referenz-Eingang der erste Eingang der Einstellschaltung ist,

   --    an dessen erstem Signaleingang der digitalisierte Nullpunkt-Einstellwert, $A_0$,

   --    an dessen zweitem Signaleingang der digitalisierte erste Spanne-Einstellwert, $A_2$, und

   --    dessen erster sowie dessen zweiter Signal-Enable-Eingang vom Taktoszillators angesteuert sind,

-    einen zweiten, ein positives und ein negatives Wandlersignal abgebenden Digital/Analog-Wandler,

   --    dessen Referenz-Eingang der zweite Eingang der Einstellschaltung ist,

   --    an dessen erstem Signaleingang der digitalisierte Temperaturkoeffizient-Einstellwert, $A_1$, des Nullpunkts,

   --    an dessen zweitem Signaleingang der digitalisierte Temperaturkoeffizient-Spanne-Einstellwert, $A_3$, und

   --    dessen erster sowie dessen zweiter Signal-Enable-Eingang vom Taktoszillators angesteuert sind,

-    einen dritten, ein positives und ein negatives Wandlersignal abgebenden Digital/Analog-Wandler,

   --    dessen Referenz-Eingang der dritte Eingang der Einstellschaltung ist,

   --    an dessen erstem Signaleingang der digitalisierte zweite Spanne-Einstellwert, $B_0$ liegt,

   --    an dessen zweitem Signaleingang der digitalisierte Linearisierungs-Einstellwert, $B_1$ liegt, und

   --    dessen erster sowie dessen zweiter Signal-Enable-Eingang vom Taktoszillators) angesteuert sind,

-    einen ersten und einen zweiten Summierer mit jeweils einem Ausgang und mit jeweils sechs Eingängen, von denen

   --    dem ersten bzw. dem zweiten Eingang des ersten Summierers über einen ersten bzw. einen zweiten Schalter das positive bzw. das negative Wandlersignal des dritten Digital/Analog-Wandlers zugeführt ist,

   --    dem ersten bzw. dem zweiten Eingang des zweiten Summierers über einen dritten bzw. einen vierten Schalter das positive bzw. das negative Wandlersignal des dritten Digital/Analog-Wandlers zugeführt ist,

   --    dem dritten bzw. dem vierten Eingang des ersten Summierers über einen fünften bzw. einen sechsten Schalter das positive bzw. das negative Wandlersignal des ersten Digital/Analog—Wandlers zugeführt ist,

   --    dem dritten bzw. vierten Eingang des zweiten Summierers über einen siebten bzw. einen achten Schalter das positive bzw. das negative Wandlersignal des ersten Digital/Analog-Wandlers zugeführt ist,

   --    dem fünften bzw. dem sechsten Eingang des ersten Summierers über einen neunten bzw. einen zehnten Schalter das positive bzw. das negative Wandlersignal des zweiten Digital/Analog-Wandlers zugeführt ist und

   --    dem fünften bzw. dem sechsten Eingang des zweiten Summierers über einen elften bzw. einen zwölften Schalter das positive bzw. das negative Wandlersignal des zweiten Digital/Analog-Wandlers zugeführt ist, wobei

     ---    der Ausgang des ersten Summierers über einen 13. Schalter und der Ausgang des zweiten Summieres über einen 14. Schalter am Meß-Kondensator

     ---    sowie der Ausgang des ersten Summierers über einen 15. Schalter und der Ausgang des zweiten Summieres über einen 16. Schalter am Referenz-Kondensator liegt sowie

     ---    der jeweilige schalter-abgewandte Anschluß von Meß-bzw. Referenz-Kondensator am ersten Referenzpotential, insb. Schaltungsnullpunkt liegen.

Ferner kann in Ausgestaltung der Erfindung für das Kapazitätsverhältnis $C_{V1} = (C_p - C_r)/C_p$ oder das Kapa-

zitätsverhältnis $C_{V2} = (C_p - C_r)/(C_p + C_r)$ der erste Integrator umfassen:

- einen ersten Operationsverstärker,

  -- dessen invertierender Eingang über einen 17. Schalter am Meß-Kondensator und über einen 18. Schalter am Referenz-Kondensator liegt,

     --- wobei der Verbindungspunkt von 18. Schalter und Referenz-Kondensator über einen 19. Schalter am Referenzpotential liegt,

  -- dessen nicht-invertierender Eingang ebenfalls am Referenzpotential liegt,
  -- dessen invertierender Eingang mit dem Ausgang über drei Parallelzweige verbunden ist,

     --- von denen der erste Parallelzweig aus der Serienschaltung eines 20. und eines 21. Schalters,
     --- von denen der zweite Parallelzweig aus der Serienschaltung eines 22. und eines 23. Schalters sowie
     --- von denen der dritte Parallelzweig aus einem 24. Schalter besteht,

        ---- wobei der umzupolende Kondensator zwischen dem Verbindungspunkt des 20. mit dem 21. Schalter und dem Verbindungspunkt des 22. mit dem 23. Schalter liegt.

Auch kann in weiterer Ausgestaltung der Erfindung der zweite Integrator umfassen:

- einen zweiten Operationsverstärker,

  -- dessen invertierender Eingang über einen 25. Schalter am Verbindungspunkt des 20. mit dem 21. Schalter und über einen Festkondensator an Ausgang der Anordnung liegt und
  -- dessen nicht-invertierender Eingang mit einem zweiten Referenzpotential verbunden ist.

Wenn jedoch das Kapazitätsverhältnis $C_{V3} = (C_m - C_r)/C_r$ zugrunde gelegt wird, ist ein 26. Schalter vorzusehen, der zwischen dem Referenzpotential und dem Verbindungspunkt von 17. Schalter und Meß-Kondensator anzuordnen ist.

In weiterer Ausgestaltung der Erfindung kann an den Ausgang der Integrierstufe eine Glättungsstufe angeschlossen werden.

Schließlich kann in weiterer Ausgestaltung der Erfindung der Taktoszillator zur Ansteuerung der 25 Schalter und des jeweiligen Signal-Enable-Eingangs der drei Digital/Analog-Wandler Taktsignale mit einem positiven oder einem hierzu negativeren Pegel, ausgehend von einem Grundtakt, erzeugen, wobei der jeweilige Pegel mindestens während eines Achtels der Periodendauer des Grundtaktes auftritt.

Weitere Merkmale und Vorteile der Erfindung ergeben sich aus der folgenden Beschreibung von Ausführungsbeispielen, die in der Zeichnung dargestellt sind.

Fig. 1 zeigt          ein Prinzipschaltbild eines ersten Ausführungsbeispiels der Erfindung,

Fig. 2 zeigt          ein Prinzipschaltbild eines zweiten Ausführungsbeispiels der Erfindung,

Fig. 3 zeigt          das Prinzipschaltbild der Fig. 1 mit weiteren Ausgestaltungen,

Fig. 4 zeigt          das Prinzipschaltbild der Fig. 2 mit den weiteren Ausgestaltungen nach der Fig. 3,

Fig. 5 zeigt          den zeitlichen Verlauf von Taktsignalen, wenn das Kapazitätsverhältnnis $(C_m - C_r)/C_m$ mit einer Anordnung nach Fig. 3 oder Fig. 4 zu kompensieren ist,

Fig. 6 zeigt          den zeitlichen Verlauf von Taktsignalen, wenn das Kapazitätsverhältnnis $(C_m - C_r)/(C_m + C_r)$ mit einer Anordnung nach Fig. 3 oder Fig. 4 zu kompensieren ist,

Fig. 7 zeigt          den zeitlichen Verlauf von Taktsignalen, wenn das Kapazitätsverhältnnis $(C_m - C_r)/C_r$ mit einer Anordnung nach Fig. 3 oder Fig. 4 zu kompensieren ist,

Fig. 8 zeigt          das Prinzipschaltbild einer bei der Anordnung der Erfindung anwendbaren speziellen Stromspiegelschaltung,

Fig. 9 zeigt        einen in Zusammenhang mit der Schaltung nach Fig. 8 verwendbaren Strom-Spannungs-Konverter.

Fig. 10 zeigt        den Momentanzustand der der Periodendauer $D_1$ nach Fig. 5 entsprechenden Schalterstellungen einer Anordnung nach Fig. 3,

Fig. 11 zeigt        den Momentanzustand der der Periodendauer $D_2$ nach Fig. 5 entsprechenden Schalterstellungen einer Anordnung nach Fig. 3,

Fig. 12 zeigt        den Momentanzustand der der Periodendauer $D_3$ nach Fig. 5 entsprechenden Schalterstellungen einer Anordnung nach Fig. 3,

Fig. 13 zeigt        den Momentanzustand der der Periodendauer $D_4$ nach Fig. 5 entsprechenden Schalterstellungen einer Anordnung nach Fig. 3,

Fig. 14 zeigt        den Momentanzustand der der Periodendauer $D_5$ nach Fig. 5 entsprechenden Schalterstellungen einer Anordnung nach Fig. 3,

Fig. 15 zeigt        den Momentanzustand der der Periodendauer $D_6$ nach Fig. 5 entsprechenden Schalterstellungen einer Anordnung nach Fig. 3,

Fig. 16 zeigt        den Momentanzustand der der Periodendauer $D_7$ nach Fig. 5 entsprechenden Schalterstellungen einer Anordnung nach Fig. 3,

Fig. 17 zeigt        den Momentanzustand der der Periodendauer $D_8$ nach Fig. 5 entsprechenden Schalterstellungen einer Anordnung nach Fig. 3, und

Fig. 18 zeigt        den Momentanzustand der der Periodendauer $D_9$ nach Fig. 5 entsprechenden Schalterstellungen einer Anordnung nach Fig. 3.

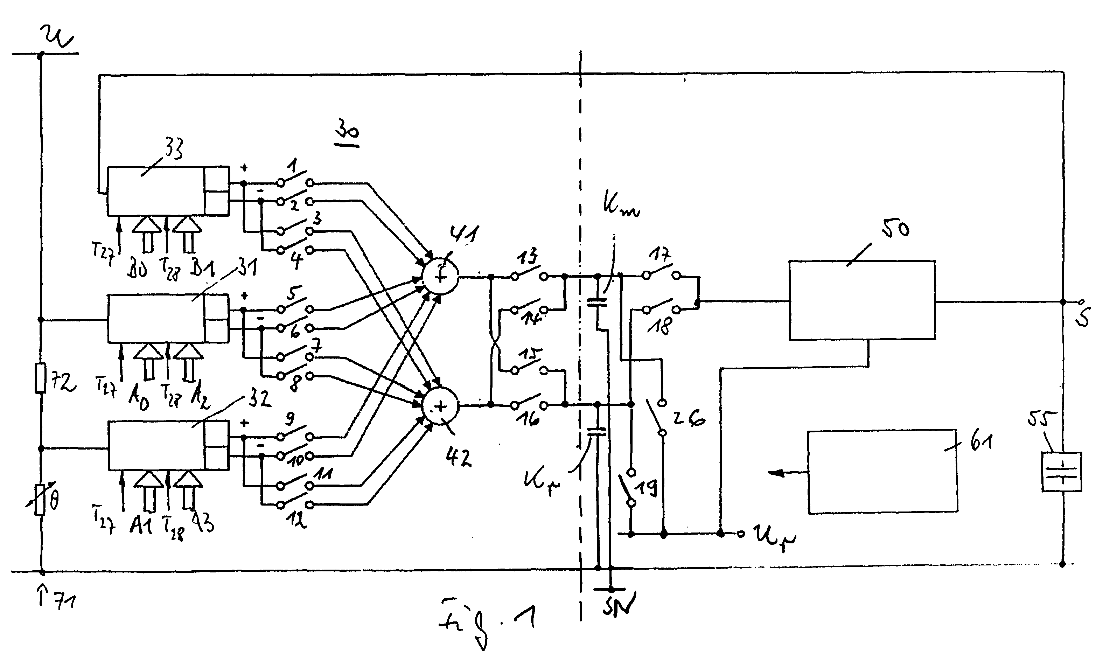

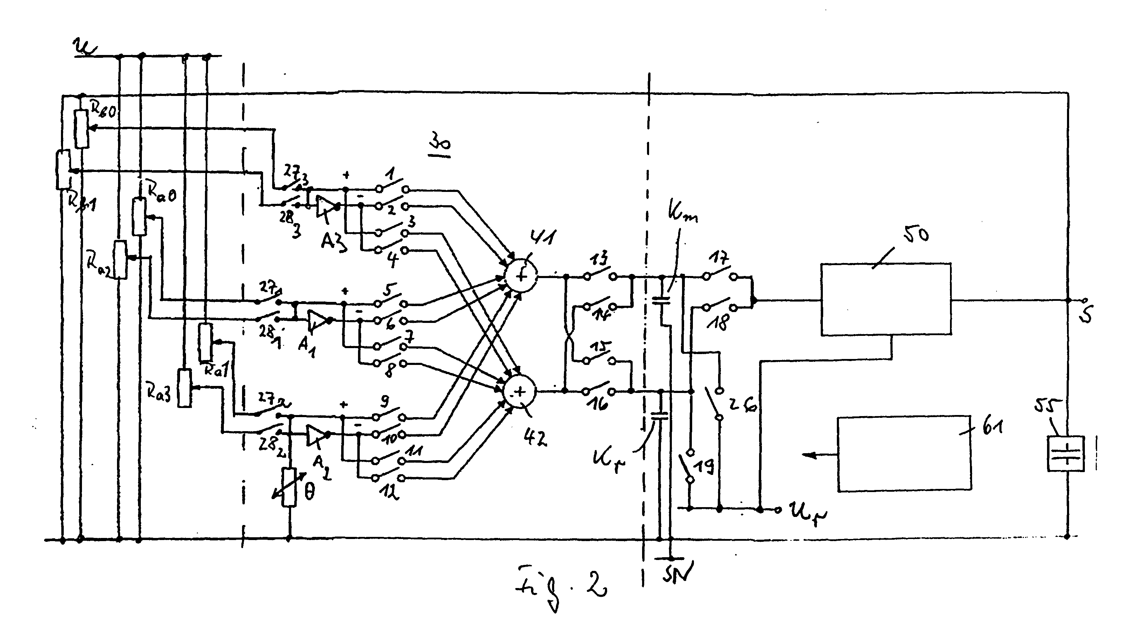

Das Prinzipschaltbild der Fig. 1 enthält einen Meß-Kondensator $K_m$ der Kapazität $C_m$ und einen Referenz-Kondensator $K_r$ der Kapazität $C_r$. Im Falle eines Drucksensors ist der Meß-Kondensator $K_m$ druckabhängig und der Referenz-Kondensator $K_r$ möglichst druck-unabhängig, wobei beide Kondensatoren vorzugsweise innerhalb des Drucksensors realisiert sind. Der Aufbau derartiger kapazitiver Drucksensoren ergibt sich z.B. aus Fig. 2 der eingangs genannten US-A 52 57 210 oder aus der US-A 50 05 421.

Im Falle von Feuchtesensoren mit einem feuchte-empfindlichen Meß-Kondensator $K_m$ kann der Referenz-Kondensator $K_r$ z.B. dadurch realisiert werden, daß ein üblicher Feuchtesensor mittels einer feuchtigkeits-undurchlässigen Abdeckschicht feuchte-unempfindlich gemacht wird. In den verschiedenen Fällen ist es also günstig, wenn der Referenz-Kondensator $K_r$ bezüglich des Meßeffekts, den der Meß-Kondensator $K_m$ nutzt, möglichst unempfindlich ist und daher als konstant betrachtet werden kann.

Zur Erzielung des kompensierten, analogen Ausgangssignals S wird bei der Erfindung eines der drei Kapazitätsverhältnisse

$C_{V1} = (C_m - C_r)/C_m$,
$C_{V2} = (C_m - C_r)/(C_m + C_r)$ oder $C_{V3} = (C_m - C_r)/C_r$ benutzt.

Zur Erzeugung eines Signals, das möglichst ausschließlich ein Maß für die Temperatur des Sensors ist, also zur Erzeugung eines temperatur-abhängigen Signals, dient ein zwischen einem ersten Referenzpotential SN der Anordnung und einem Betriebspotential U liegender Spannungsteiler 71, der einen resistiven Temperatursensor $\Theta$ mit dem Widerstandswert $R_\Theta$ und einen Vorwiderstand 72 mit dem Widerstandswert $R_{72}$ umfaßt. Das temperatur-abhängige Widerstandsverhältnis dieses Spannungsteilers ist im folgenden mit $v_t$ bezeichnet; es gilt somit: $v_t = R_\Theta/(R_\Theta + R_{72})$. Am Abgriff des Spannungsteilers 71 entsteht somit ein Signal $s = U \cdot v_t = U \cdot R_\Theta/(R_\Theta + R_{72})$.

Der Spannungsteiler 71 ist die einfachste Realisierung eines Temperatursensors. Es liegt jedoch im Rahmen der Erfindung, jedes geeignete temperatur-abhängige Netzwerk im Bedarfsfall heranzuziehen. So könnte z.B. dem resistiven Temperatursensor noch ein temperatur-unabhängiger Widerstand parallelgeschaltet sein, oder es könnte eine temperatur-abhängige Brückenschaltung vorgesehen werden.

Das erste Referenzpotential SN kann bevorzugt das Potential des in der Anordnung sowieso vorhandenen Schaltungsnullpunkts sein. Ist dies nicht vorgesehen, so kann das erste Referenzpotential SN beispielsweise etwa bei der Hälfte des Wertes des Betriebspotentials U liegen.

Im Gegensatz zu den in der eingangs genannten US-A 52 57 210 beschriebenen Anordnungen ist bei der Erfindung eine auf den Meß-Kondensator $K_m$ und den Referenz-Kondensator $K_r$ im Sinne der Linearisierung und der Temperaturkompensation direkt einwirkende Einstellschaltung 30 vorgesehen. Die von ihr erzeugten Analogsignale sind dem Meß- und dem Referenz-Kondensator $K_m$, $K_r$ getaktet direkt zugeführt. Somit werden also bereits hier dem Meß-und dem Referenz-Kondensator $K_m$, $K_r$ Korrektursignale derart zugeführt, daß das Ausgangssignal S der Anordnung den gewünschten linearen und temperatur-kompensierten Verlauf hat.

Diese direkte Einwirkung auf das Sensorsignal erlaubt es in einfacher Weise, zusätzlich zu den die Linearisierung und die Temperaturkompensation bewirkenden Signalen auch Stellsignale für Spanne, Nullpunkt etc. aufzuschalten, wie dies unten noch näher erläutert wird.

Die Einstellschaltung 30 ist mittels Taktsignalen getaktet, die von einem Taktoszillator 61 erzeugt werden, s. u. Ein erster Eingang der Einstellschaltung 30 liegt am Betriebspotential U und ein zweiter Eingang am Abgriff des temperatur-abhängigen Spannungsteilers 71, also am Verbindungspunkt von Temperatursensor $\Theta$ und Widerstand 72.

Ferner ist eine an den Meß-Kondensator $K_m$ und den Referenz-Kondensator $K_r$ getaktet angeschlossene Integrierstufe 50 vorgesehen, deren Ausgang der Ausgang der Anordnung ist, an dem das Ausgangssignal S auftritt. Dieser Ausgang ist mit einem dritten Eingang der Einstellschaltung 30 verbunden.

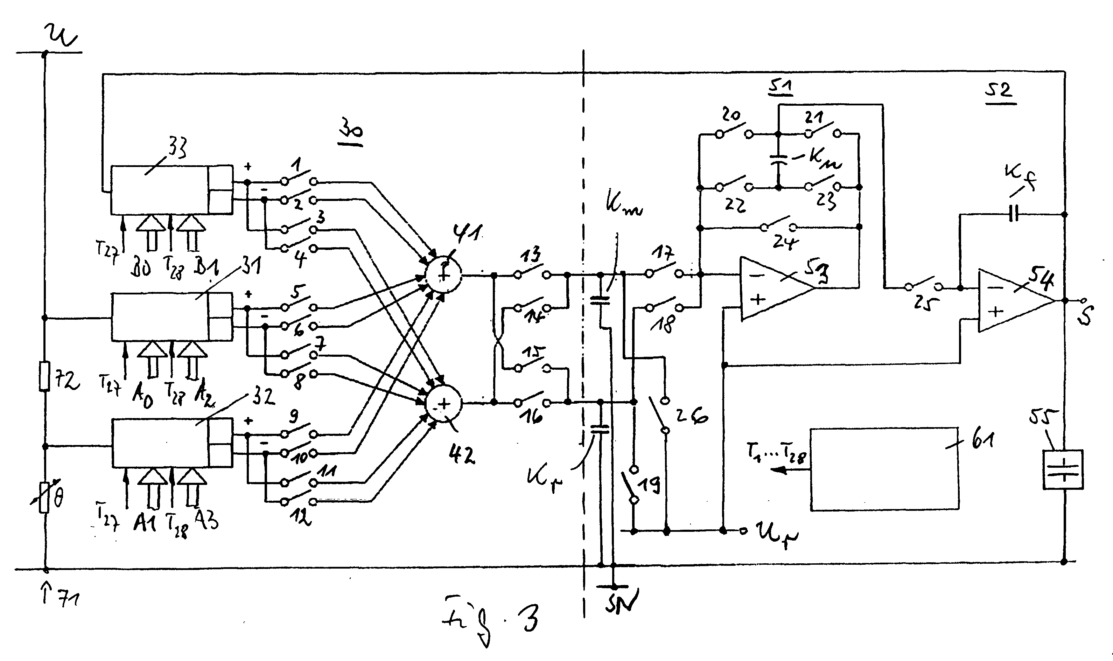

Falls es erforderlich sein sollte, kann zur Glättung des Ausgangssignals S eine Glättungsstufe 55 dienen, die im einfachsten Fall aus einem Glättungskondensator ausreichend großer Kapazität bestehen kann und mit dem Ausgang der Integrierstufe 50 zu verbinden ist, wie dies in Fig. 3 zu sehen ist.

Das Ausgangssignal S gehorcht bei der Erfindung folgender Gleichung:

$$S = \frac{U \cdot [a_0 + a_1 \cdot v_t + (a_2 + a_3 \cdot v_t) \cdot C_V]}{b_0 + b_1 \cdot C_V}.$$

Darin ist $C_V$ eines der folgenden Kapazitätsverhältnisse:

$C_{V1} =$    $(C_m - C_r)/C_m$,
$C_{V2} =$    $(C_m - C_r)/(C_m + C_r)$ oder
$C_{V3} =$    $(C_m - C_r)/C_r$;
$C_m$      die Kapazität des Meß-Kondensators $K_m$,
$C_r$      die Kapazität des Referenz-Kondensators $K_r$,
$U$      das Betriebspotential,
$a_0$      ein Nullpunkt-Einstellwert,
$a_1$      ein Temperaturkoeffizient-Einstellwert des Nullpunkts,
$a_2$      ein erster Spanne-Einstellwert,
$a_3$      ein Temperaturkoeffizient-Spanne-Einstellwert,
$b_0$      ein zweiter Spanne-Einstellwert,
$b_1$      ein Linearisierungs-Einstellwert und
$v_t$      das temperatur-abhängige Widerstandsverhältnis des Spannungsteilers 71.

Die Einstellschaltung 30 umfaßt einen ersten, einen zweiten und einen dritten, jeweils ein positives und ein negatives Wandlersignal abgebenden Digital/Analog—Wandler 31, 32, 33. Die beiden jeweiligen Wandlersignale haben dabei denselben Betrag, bezogen auf das erste Referenzpotential SN. Das jeweilige negative Wandlersignal läßt sich z.B. aus dem zugehörigen positiven mittels eines analogen, mit dem Faktor -1 multiplizierenden Multiplizierers erzeugen.

Als digital/analogzuwandelnde Signale sind dem jeweiligen Digitalsignal-Eingang der drei Digital/Analog-Wandler 31, 32, 33 Digitalsignale $A_0$, $A_1$, $A_2$, $A_3$, $B_0$, $B_1$ getaktet zugeführt, die z.B. aus den oben genannten Einstellwerten $a_0$, $a_1$, $a_2$, $a_3$, $b_0$, $b_1$ gebildet sind und z.B aus einem elektronischen Speicher, beispielsweise einem EEPROM, stammen können, worin sie zuvor abgelegt worden sind. Es können aber auch direkt Digitalsignale mit den den analogen Einstellwerten $a_0$, $a_1$, $a_2$, $a_3$, $b_0$, $b_1$ entsprechenden Digitalwerten gebildet werden und den Digital/Analog-Wandlern direkt zugeführt werden, z.B. über einen entsprechenden Datenbus.

Die drei Digital/Analog-Wandler 31, 32, 33 haben auch je einen Referenz-Eingang, dem - jeweils ein anderes - analoges Signal zugeführt ist, das den jeweiligen Referenzwert darstellt, auf den die Digital/Analog-Wandlung bezogen ist. Ferner ist jedem Digitalsignal-Eingang ein Signal-Enable-Eingang zugeordnet. Somit hat jeder Digital/Analog-Wandler zwei Signal-Enable-Eingänge, denen jeweils eines der Taktsignale $T_{27}$, $T_{28}$ des Taktoszillators 61 zugeführt sind.

Der Referenz-Eingang des ersten Digital/Analog-Wandlers 31 ist der erste Eingang der Einstellschaltung 30.

An ihm liegt, wie bereits erwähnt wurde, das Betriebspotential U. Dem ersten Signaleingang des ersten Digital/Analog-Wandlers 31 ist der digitalisierte Nullpunkt-Einstellwert $A_0$ und dem zweitem Signaleingang der digitalisierte erste Spanne-Einstellwert $A_2$ zugeführt.

Der Referenz-Eingang des zweiten Digital/Analog-Wandlers 32 ist der zweite Eingang der Einstellschaltung 30. An ihm liegt, wie bereits erwähnt wurde, der Abgriff des temperatur-abhängigen Spannungteilers 71 und somit das erwähnte temperatur-abhängige Signal $U \cdot v_t$. Dem ersten Signaleingang des zweiten Digital/Analog-Wandlers 32 ist der digitalisierte Temperaturkoeffizient-Einstellwert $A_1$ des Nullpunkts und dem zweitem Signaleingang der digitalisierte Temperaturkoeffizient-Spanne-Einstellwert $A_3$ zugeführt.

Der Referenz-Eingang des dritten Digital/Analog-Wandlers 33 ist der dritte Eingang der Einstellschaltung 30. An ihm liegt, wie bereits erwähnt wurde, das Ausgangssignal S. Dem ersten Signaleingang des dritten Digital/Analog-Wandlers 33 ist der digitalisierte zweite Spanne-Einstellwert $B_0$ und dessen zweitem Signaleingang der digitalisierte Linearisierungs-Einstellwert $B_1$ zugeführt.

Die Einstellschaltung 30 umfaßt ferner einen ersten und einen zweiten Summierer 41, 42 mit jeweils sechs Eingängen und mit jeweils einem Ausgang.

Dem ersten bzw. dem zweiten Eingang des ersten Summierers 41 ist über einen ersten bzw. einen zweiten Schalter 1, 2 das positive bzw. das negative Wandlersignal des dritten Digital/Analog-Wandlers 33 zugeführt.

Dem ersten bzw. dem zweiten Eingang des zweiten Summierers 42 ist über einen dritten bzw. einen vierten Schalter 3, 4 das positive bzw. das negative Wandlersignal des dritten Digital/Analog-Wandlers 33 zugeführt.

Dem dritten bzw. dem vierten Eingang des ersten Summierers 41 ist über einen fünften bzw. einen sechsten Schalter 5, 6 das positive bzw. das negative Wandlersignal des ersten Digital/Analog-Wandlers 31 zugeführt.

Dem dritten bzw. vierten Eingang des zweiten Summierers 42 ist über einen siebten bzw. einen achten Schalter 7, 8 das positive bzw. das negative Wandlersignal des ersten Digital/Analog-Wandlers 31 zugeführt.

Dem fünften bzw. dem sechsten Eingang des ersten Summierers 41 ist über einen neunten bzw. einen zehnten Schalter 9, 10 das positive bzw. das negative Wandlersignal des zweiten Digital/Analog-Wandlers 32 zugeführt.

Dem fünften bzw. dem sechsten Eingang des zweiten Summierers 42 ist über einen elften bzw. einen zwölften Schalter 11, 12 das positive bzw. das negative Wandlersignal des zweiten Digital/Analog-Wandlers 32 zugeführt.

Der jeweilige schalter-abgewandte Anschluß von Meß- bzw. Referenz-Kondensator $K_m$, $K_r$ liegen am ersten Referenzpotential SN. Da auch der Spannungsteiler 71 und das Betriebspotential U auf den erste Referenzpotential SN bezogen sind, werden in der Anordnung ausschließlich Verhältniswerte verarbeitet.

Der Ausgang des ersten Summierers 41 liegt über einen 13. Schalter 13 und der Ausgang des zweiten Summieres 42 über einen 14. Schalter 14 am Meß-Kondensator Km. Ferner liegt der Ausgang des ersten Summierers 41 über einen 15. Schalter 15 und der Ausgang des zweiten Summieres 42 über einen 16. Schalter 16 am Referenz-Kondensator $K_r$.

In Fig. 2 ist ein zweites Ausführungsbeispiel in Form eines schematisierten Schaltbilds gezeigt. Es unterscheidet sich vom Ausführungsbeispiel nach Fig. 1 dadurch, daß anstatt der drei dortigen Digital/Analog-Wandler 31, 32, 33 hier Einstellwiderstände $R_{a0}$, $R_{a1}$, $R_{a2}$, $R_{a30}$, $R_{b0}$, $R_{b1}$ vorgesehen sind, mittels denen die analogen Einstellgrößen $a_0$, $a_1$, $a_2$, $a_3$, $b_0$, $b_1$ erzeugt werden.

Durch die gestrichelte senkrechte Linie ist links in Fig. 2 die Schnittstelle hinsichtlich der Realisierung angedeutet: die Einstellwiderstände können z.B. als Hybrid-Schaltkreis und der rechts von dieser Linie liegende Teil der Anordnung zweckmäßigerweise als monolithisch integrierte Halbleiter-Schaltung ausgeführt werden.

Wenn zugelassen werden kann oder soll, daß der Benutzer der Anordnung die Einstellgrößen mindestens teilweise verändern kann, so sind die Einstellwiderstände z.B. als Potentiometer zu realisieren. Wenn andererseits die Anordnung herstellerseits bereits fest eingestellt wird, werden die Einstellwiderstände als, vorzugsweise laser-getrimmte, Halbleiter- oder Dünnschicht-Widerstände realisiert.

Jeder Einstellwiderstand $R_{a0}$, $R_{a2}$ liegt, als Spannungsteiler geschaltet, zwischen dem ersten Referenzpotential SN und dem Betriebspotential U. Der Abgriff des Einstellwiderstands $R_{a0}$ liegt über einen weiteren Schalter $27_1$ und der Abgriff des Einstellwiderstands $R_{a2}$ über einen weiteren Schalter $28_1$ am Eingang eines Analoginverters $I_1$ und am fünften Schalter 5 und am siebten Schalter 7. Der Ausgang des Analoginverters $I_1$ liegt am sechsten Schalter 6 und am achten Schalter 8. Dem Schalter $27_1$ ist das Taktsignal $T_{27}$ und dem Schalter $28_1$ das Taktsignal $T_{28}$ zugeführt.

Der Einstellwiderstand $R_{a1}$ liegt über einen weiteren Schalter $27_2$ und der Abgriff des Einstellwiderstands $R_{a3}$ über einen weiteren Schalter $28_2$ am schaltungsnullpunkt-abgewandten Anschluß des Temperatursensors $\Theta$, am Eingang eines Analoginverters $I_2$ und am neunten Schalter 9 und am elften Schalter 11. Der Ausgang des Analoginverters $I_2$ liegt am zehnten Schalter 10 und am zwölften Schalter 12. Dem Schalter $27_2$ ist das Taktsignal $T_{27}$ und dem Schalter $28_2$ das Taktsignal $T_{28}$ zugeführt. Somit werden in Fig. 2 zwei dem Spannungsteiler 71 nach Fig. 1 entsprechende, jeweils den Temperatursensor $\Theta$ enthaltende Spannungsteiler immer dann realisiert, wenn der zugeordnete Schalter $27_2$ bzw. $28_2$ geschlossen ist.

Jeder Einstellwiderstand $R_{b0}$, $R_{b1}$ liegt, als Spannungsteiler geschaltet, zwischen dem ersten Referenzpotential SN und dem Ausgang der Anordnung; sie erhalten somit das geglättete Ausgangssignal S zugeführt. Der Abgriff des Einstellwiderstands $R_{b0}$ liegt über einen weiteren Schalter $27_3$ und der Abgriff des Einstellwiderstands $R_{b1}$ über einen weiteren Schalter $28_3$ am Eingang eines Analoginverters $I_3$ und am ersten Schalter 1 und am dritten Schalter 3. Der Ausgang des Analoginverters $I_3$ liegt am zweiten Schalter 2 unsd vierten Schalter 4. Dem Schalter $27_3$ ist das Taktsignal $T_{27}$ und dem Schalter $28_3$ das Taktsignal $T_{28}$ zugeführt.

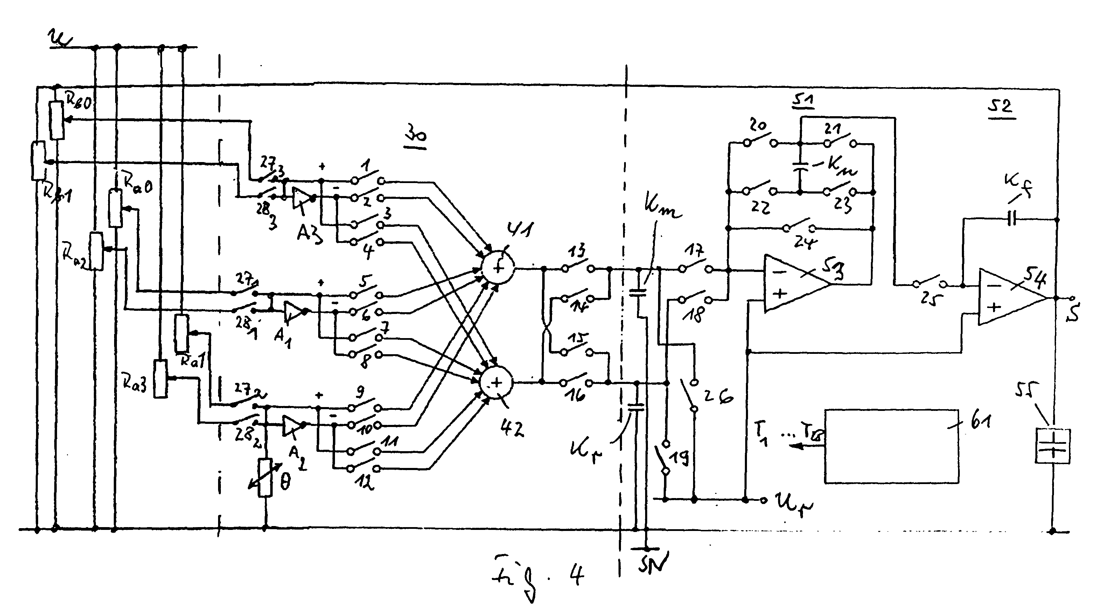

Bei den in Fig. 3 bzw. in Fig. 4 gezeigten weiteren Ausgestaltungen der Ausführungsbeispiele nach der Fig. 1 bzw. nach der Fig. 2 sind lediglich die rechts liegenden Schaltungsteile von denen der Fig. 1 bzw. 2 verschieden, so daß nur noch diese rechten Teile erläutert werden; es handelt sich dabei um bevorzugte Ausgestaltungen der Integrierstufe 50 nach der Fig. 1 bzw. nach der Fig. 2.

Das am Meß- bzw. am Referenz-Kondensator $K_m$, $K_r$ vorhandene Signal ist einem ersten Integrator 51 getaktet zugeführt. Dieser enthält einen ersten Operationsverstärker 53, dessen invertierender Eingang über einen 17. Schalter 17 am Meß-Kondensator $K_m$ und über einen 18. Schalter 18 am Referenz-Kondensator $K_r$ liegt, wobei der Verbindungspunkt von 18. Schalter und Referenz-Kondensator über einen 19. Schalter 19 an einem zweiten Referenzpotential $U_r$ liegt.

Dieses zweite Referenzpotential $U_r$ ist ein vom Potential des Schaltungsnullpunkts und vom Betriebspotential U verschiedenes Potential. Es liegt zweckmäßigerweise z.B. etwa in der Mitte zwischen dem Potential des ersten Referenzpotentials SN und dem Betriebspotential U. Wenn also z.B. für das Betriebspotential U ein Wert von +5 V festgelegt wird, wählt man das zweite Referenzpotential $U_r$ im Bereich von +2,5 V.

Am zweiten Referenzpotential $U_r$ ist auch der nicht-invertierende Eingang des ersten Operationsverstärkers 53 angeschlossen, und dessen invertierender Eingang ist mit dem Ausgang über drei Parallelzweige verbunden. Der erste Parallelzweig besteht aus der Serienschaltung eines 20. und eines 21. Schalters 20, 21, der zweite Parallelzweig aus der Serienschaltung eines 22. und eines 23. Schalters 22, 23 und der dritte Parallelzweig aus einem 24. Schalter 24. $P_2$ in umzupolende Kondensator $K_u$ liegt zwischen dem Verbindungspunkt des 22. mit dem 23. Schalter und dem Verbindungspunkt des 20. mit dem 21. Schalter; dieser Verbindungspunkt ist auch der Ausgang des ersten Integrators 51.

Das am Ausgang des ersten Integrators 51 vorhandene Signal ist einem zweiten Integrator 52 getaktet zugeführt. Dieser umfaßt einen zweiten Operationsverstärker 54, dessen invertierender Eingang über einen 25. Schalter 25 am Verbindungspunkt des 20. mit dem 21. Schalter und über einen Festkondensator $K_f$ an Ausgang der Anordnung liegt und dessen nicht-invertierender Eingang mit dem zweiten Referenzpotential $U_r$ verbunden ist.

Bei der bis anhin erläuterten Anordnung wird der Signalaufbereitung entweder das Kapazitätsverhältnis
$C_{V1} = (C_m - C_r)/C_m$ oder das Kapazitätsverhältnis
$C_{V2} = (C_m - C_r)/(C_m + C_r)$ zugrunde gelegt. Soll dagegen das Kapazitätsverhältnis $C_{V3} = (C_m - C_r)/C_r$ verarbeitet werden, so ist noch ein 26. Schalter 26 vorzusehen, der zwischen dem zweiten Referenzpotential $U_r$ und dem Verbindungspunkt von 17. Schalter 17 und Meß-Kondensator $K_m$ liegt.

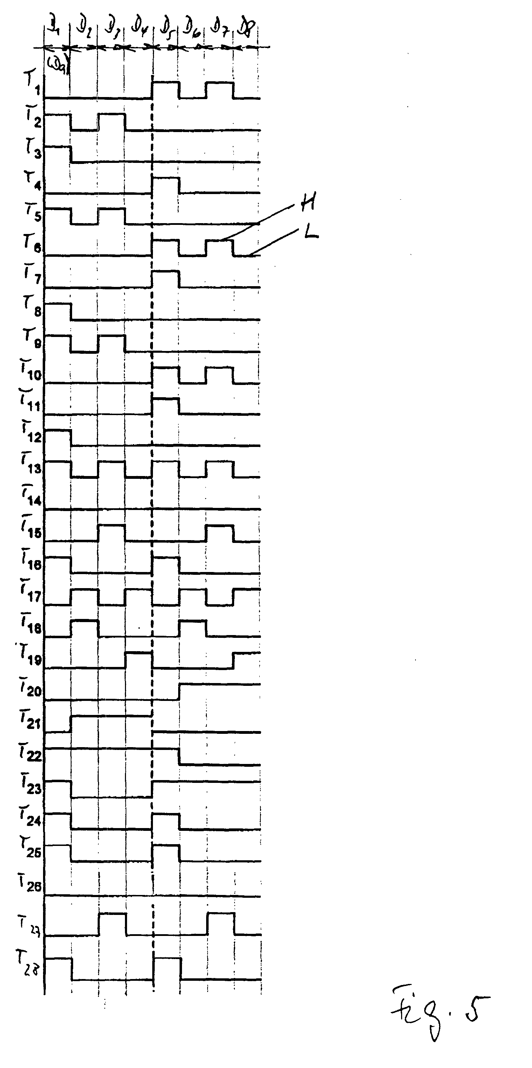

Der Taktoszillator 61 erzeugt, ausgehend von einem Grundtakt, 28 Taktsignale $T_1 ... T_{28}$ zur Ansteuerung der 26 Schalter 1 ... 26 und des jeweiligen Signal-Enable-Eingangs der drei Digital/Analog-Wandler 31, 32, 33, vgl. hierzu die Fig. 5 bis 7. Die Taktsignale $T_1 ... T_{28}$ haben einen positiven oder einen hierzu negativeren Pegel H, L. Der jeweilige Pegel tritt mindestens während eines Achtels $D_1 ... D_8$ der Periodendauer $D = \Sigma(D_1 ... D_8)$ des Grundtaktes auf.

Der jeweilige H-Pegel steuert die 26 Schalter und die entsprechenden Schalter der sechs Signal-Enable-Eingänge der drei Digital/Analog-Wandler 31, 32, 33 in den leitenden Zustand und der jeweilige L-Pegel in den nichtleitenden Zustand. Diese Schalter werden zweckmäßigerweise mittels elektronischer Komponenten, z.B. mittels Transistoren, insb. Isolierschicht-Feldeffekt-Transistoren, realisiert.

Die Taktsignale $T_1 ... T_{28}$ werden im Taktoszillator 61 aus einem Oszillatorsignal, dessen Periodendauer gleich $D_1$ ist, z. B. durch Frequenzteilung und durch logische Verknüpfung der frequenz-geteilten Signale abgeleitet, wie dies dem Fachmann geläufig ist. Der oben erwähnte Grundtakt entsteht aus dem Oszillatorsignal mittels Frequenzteilung durch den Divisor 8.

Die Taktsignale $T_{13}$, $T_{17}$ nach Fig. 5 sind z.B. aus dem Oszillatorsignal mittels des Divisors 2 erzeugte Taktsignale, die gegeneinander um 180° phasenverschoben sind. Die Taktsignale $T_4$, $T_7$, $T_{11}$ nach Fig. 5 sind andererseits aus dem Grundtakt abgeleitete Taktsignale, deren H-Pegel so gelegt ist, daß er im fünften Achtel $D_5$ auftritt.

Die Zuordnung des jeweiligen H- bzw. L-Pegels zu den einzelnen Achteln jeden Taktsignals und deren Wirkung wird im folgenden noch näher beschrieben.

In Fig. 5 ist der Verlauf der Taktsignale $T_{..}$ während einer Periodendauer D des Grundtakts für das Kapazitätsverhältnis $C_{V1} = (C_m - C_r)/C_m$ gezeigt. Wie zu sehen ist, haben einige der Taktsignale dauernd einen L-Pegel, nämlich die Taktsignale $T_{14}$, $T_{26}$, so daß die davon angesteuerten Schalter 14, 26 eigentlich nicht realisiert und die Taktsignale $T_{14}$, $T_{26}$, nicht erzeugt zu werden brauchen.

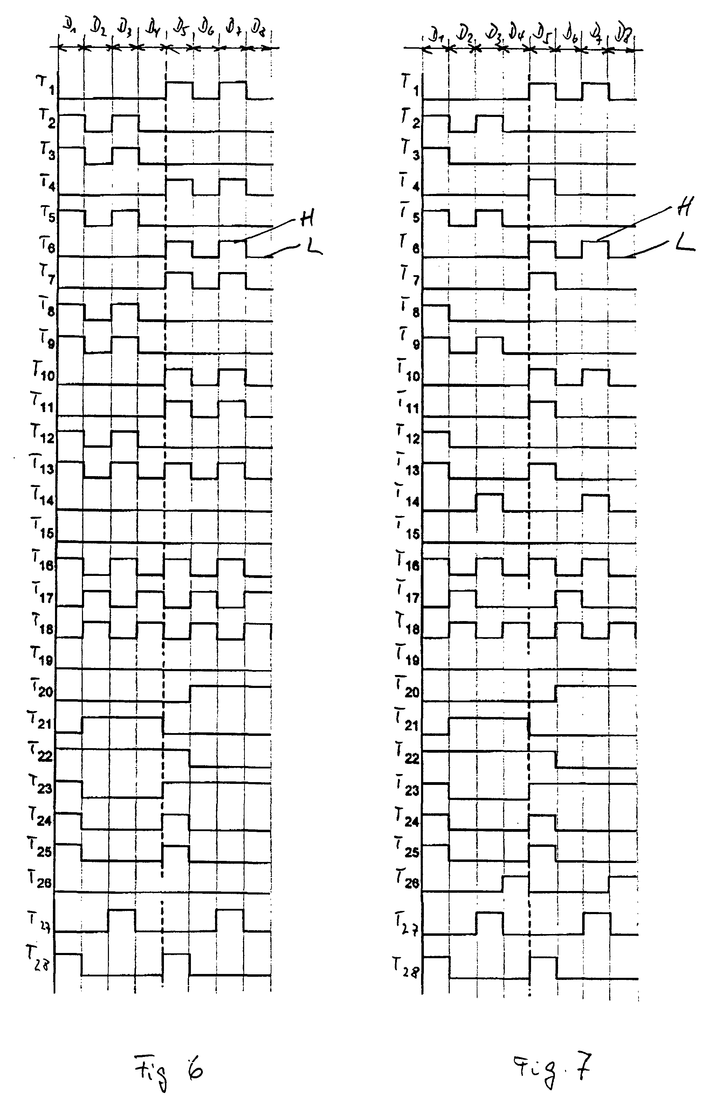

In Fig. 6 ist der Verlauf der Taktsignale $T_{..}$ während einer Periodendauer D des Grundtakts für das Kapazitätsverhältnis $C_{V1} = (C_m - C_r)/(C_m + C_r)$ gezeigt. Wie zu sehen ist, haben auch hier einige der Taktsignale dauernd einen L-Pegel, nämlich die Taktsignale $T_{14}$, $T_{15}$, $T_{19}$, $T_{26}$, so daß die davon angesteuerten Schalter 14, 15, 19, 26 ebenfalls wie oben eigentlich nicht realisiert und die Taktsignale $T_{14}$, $T_{15}$, $T_{19}$, $T_{26}$ nicht erzeugt zu werden brauchen.

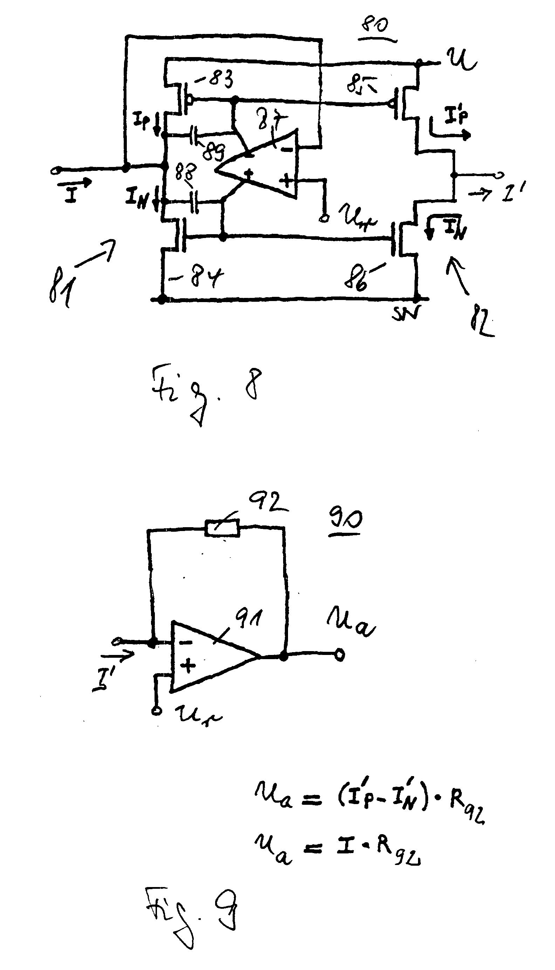

In Fig. 7 ist der Verlauf der Taktsignale $T_{..}$ während einer Periodendauer D des Grundtakts für das Kapazitätsverhältnis $C_{V1} = (C_m - C_r)/C_r$ gezeigt. Wie zu sehen ist, haben auch hier wieder einige der Taktsignale dauernd einen L-Pegel, nämlich die Taktsignale $T_{15}$, $T_{19}$, so daß die davon angesteuerten Schalter 15, 19, wieder wie oben eigentlich nicht realisiert und die Taktsignale $T_{15}$, $T_{19}$ nicht erzeugt zu werden brauchen.

Daß diese bei der Realisierung des jeweiligen Kapazitätsverhältnisses nicht benötigten Schalter und Taktsignale trotzdem dargestellt sind, hängt damit zusammen, daß in den Fig. 1 bis 4 die für die wahlweise Realisierung der drei Varianten $C_{V1}$, $C_{V2}$, $C_{V3}$ des Kapazitätsverhältnisses der Anordnung gemeinsam geltende Schaltung dargestellt ist. Wegen dieser Systematik der Darstellung der Erfindung sind die bei einem einzelnen Kapazitätsverhältnis nicht benötigten Schalter in den Fig. 1 bis 4 sowie die entsprechenden Taktsignale in den Fig. 5 bis 7 jedoch enthalten.

Wenn der Messung allein eines der drei Kapazitätsverhältnisse zugrunde gelegt werden soll, so brauchen diejenigen Schalter, die von einem dauernden L-Pegel angesteuert werden, natürlich nicht realisiert und die zugehörigen Taktsignale nicht erzeugt zu werden.

Wie aus dem Verlauf der Taktsignale der Fig. 5 bis 7 entnommen werden kann, wird bei der Erfindung während der zweiten vier Periodendauern $D_5$ ... $D_8$ der jeweilige, im Vergleich zu den Periodendauern $D_1$ ... $D_4$ inverse Ausgang der Digital/Analog-Wandler 31, 32, 33 nach den Fig. 1 und 3 bzw. das inverse Signal der Einstell-Widerstände nach den Fig. 2 und 4 mittels der entsprechenden Schalter zu den Kondensatoren $K_m$, $K_r$ durchgeschaltet.

Bei den Ausführungsbeispielen der Fig. 3 und 4 wird ferner auch der Kondensator $K_u$ mittels der entsprechenden Schalter während der zweiten vier Periodendauern $D_5$ ... $D_8$ der im Vergleich zu seiner Polarität während der ersten vier Periodendauern $D_1$ ... $D_4$ umgepolt. Dieses periodische Umpolen der Polarität ermöglicht die Kompensation von Offset-Spannungen von vorhandenen Operationsverstärkern und kann als Choppertechnik bezeichnet werden.

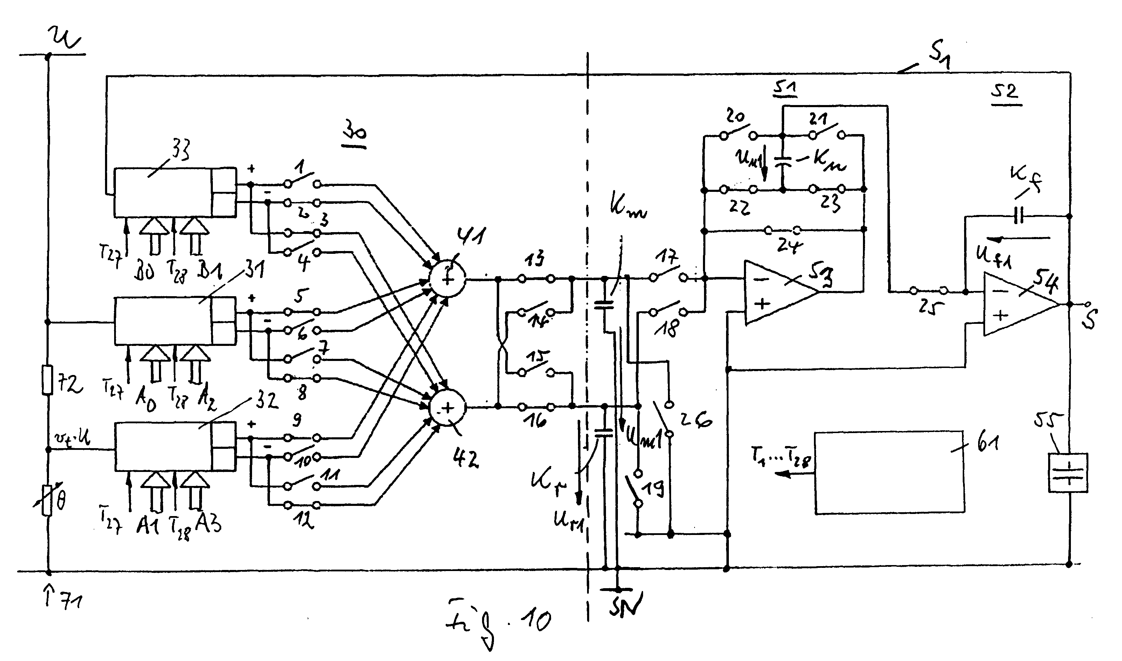

In Fig. 8 ist das Prinzipschaltbild einer speziellen Stromspiegelschaltung gezeigt, die hier zur Unterscheidung von üblichen Stromspiegeln als Stromkopierer bezeichnet ist. Dieser Stromkopierer 80 wird zweckmäßigerweise dann verwendet, wenn bei den Ausführungsbeispielen nach den Fig. 2 und 4, also denjenigen Ausführungsbeispielen mit Widerständen als Generatoren der analogen Einstellgrößen $a_0$, $a_1$, $a_2$, $a_3$, $b_0$, $b_1$, den Eingängen der Summierer 41, 42 möglichst ideale Spannungssignale zugeführt werden sollen, d.h. also Spannungen mit möglichst kleinem Innenwiderstand der sie erzeugenden Spannungsquelle. Diese Forderung ist natürlich bei dem in den Fig. 3 und 4 der Übersichtlichkeit wegen lediglich direkt gezeigten, jeweiligen Abgriff an den Spannungsteilern nicht erfüllt.

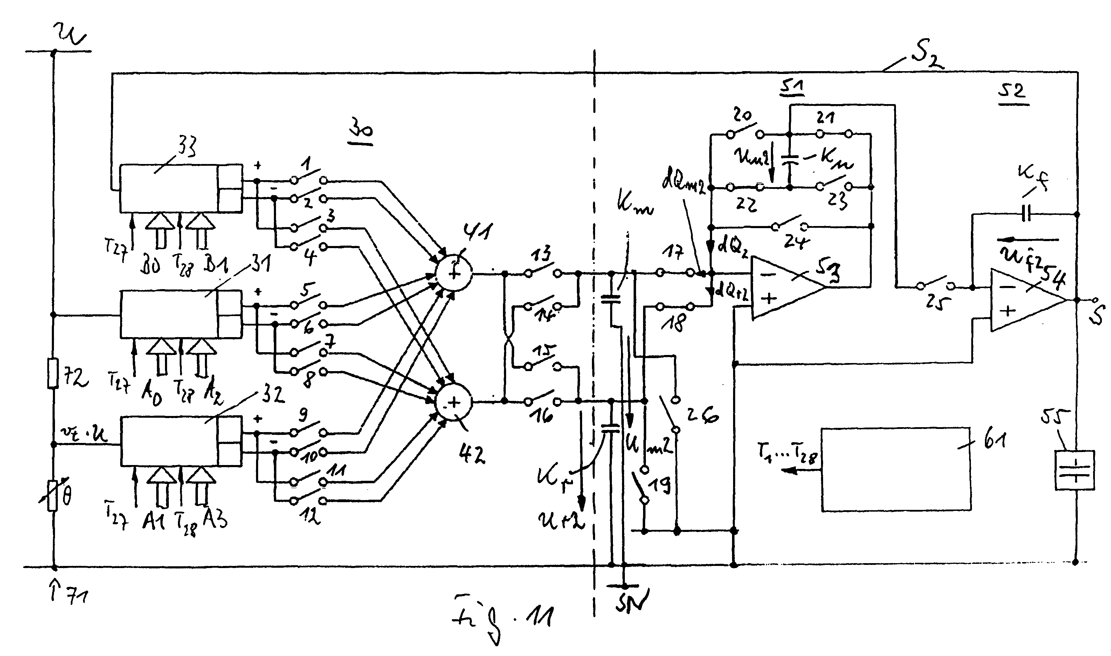

Mittels eines Stromkopieres nach Fig. 8 wird zunächst ein vom Potential am jeweiligen Spannungsteiler-Abgriff unabhängiger Strom erzeugt, der dann mittels eines in Fig. 9 gezeigten Strom-Spannungs-Konverters in eine Spannung mit niedrigem Innenwiderstand der Spannungsquelle transformiert wird.

Im einzelnen zeigt das Schaltbild von Fig. 8 eine erste Serienschaltung 81 aus zwei zwischen dem Betriebspotential U und dem ersten Referenzpotential SN, mit ihren gesteuerten Strompfaden in Serie geschaltet, liegenden Transistoren 83, 84, die von zueinander komplementärem Leitungstyp sind.

Ferner ist eine zweite Serienschaltung 82 aus zwei zwischen dem Betriebspotential U und dem ersten Refernzpotential SN, mit ihren gesteuerten Strompfaden in Serie geschaltet, liegenden Transistoren 85, 86 gezeigt, die von zueinander komplementärem Leitungstyp sind.

Die Steueranschlüsse der beiden Transistoren 83, 85 des einen Leitungstyps sind miteinander verbunden und ebenso die Steueranschlüsse der beiden Transistoren 84, 86 des anderen Leitungstyps.

In Fig. 8 ist für die Transistoren jeder Serienschaltung 81, 82 das Schaltsymbol von Enhancement-Isolierschicht-Feldeffekt-Transistoren gezeigt - Transistor 83 bzw. 85 ist ein p-Kanal- und Transistor 84 bzw. 86 ein n-Kanal-Transistor -, jedoch sind auch andere Arten von Transistoren verwendbar; das hängt ganz von der speziellen Realisierungs-Technologie ab..

Der Verbindungspunkt der Strompfade der Transistoren 83, 84 der ersten Serienschaltung 81 liegt am invertierenden Eingang eines weiteren Operationsverstärkers 87, dessen nicht-invertierender Eingang am zweiten Referenzpotential $U_r$ angeschlossen ist. Der Operationsverstärkers 87 hat einen Differenzausgang, dessen positiver Pol am Verbindungspunkt der Steueranschlüsse der beiden Transistoren 84, 86 und dessen negativer Pol am Verbindungspunkt der Steueranschlüsse der beiden Transistoren 83, 85 liegt. Ferner ist jeder dieser Pole über je einen Kondensator 88 bzw. 89 mit dem Verbindungspunkt der gesteuerten Strompfade der Transistoren der ersten Serienschaltung 81 verbunden.

In die Fig. 8 ist auch das Verhalten des Stromkopierers hinsichtlich des Eingangsstroms I eingezeichnet. Der Eingangsstroms I teilt sich in einen im Transistor 83 fließenden "positiven" Strom $I_P$ und einen im Transistor 84 fließenden "negativen" Strom $I_N$ auf. In den Transistoren 85, 86 der zweiten Serienschaltung 82 fließen entsprechend gleiche - kopierte - Ströme $I'_P$ bzw. $I'_N$, die sich zum - kopierten Strom I' addieren.

Der in Fig. 9 gezeigte Strom-Spannungs-Konverter 90 dient zur Umwandlung des Stromes I' von Fig. 8 in eine Ausgangsspannung $U_a$. Hierzu ist der Ausgang des Stromkopierers 80 mit dem Eingang des Strom-Spannungs-Konverters 90 zu verbinden. Dieser besteht aus eienm weiteren Operationsverstärker 91, dessen invertierender Eingang einerseits über einen Widerstand 92 mit dem Widerstandswert $R_{92}$ an seinem Ausgang liegt und andererseits der Eingang des Strom-Spannungs-Konverters 90 ist, während der nicht-invertierende Eingang am zweiten Referenz-

potential $U_r$ liegt. Somit gilt für die Ausgangsspannung: $U_a = I' \cdot R_{92}$.

Die Schaltungen der Fig. 8 und 9 sind besonders vorteilhaft verwendbar, wenn die Anordnung nach der Erfindung als monolithisch integrierte Halbleiterschaltung realisiert werden soll.

Ein Vorteil des Stromkopierers nach Fig. 8 besteht darin, daß an seinem Eingang kein Pufferverstärker erforderlich ist und somit auch nicht dessen Widerstände, die bei der eben erwähnten Integrierung als integrierte Halbleiter-Widerstände mit den ihnen inhärenten Nachteilen zu realisieren wären. Außerdem kann die Offset-Spannung des Stromkopierers durch die bei der Erfindung angewandte Choppertechnik (siehe oben) kompensiert werden.

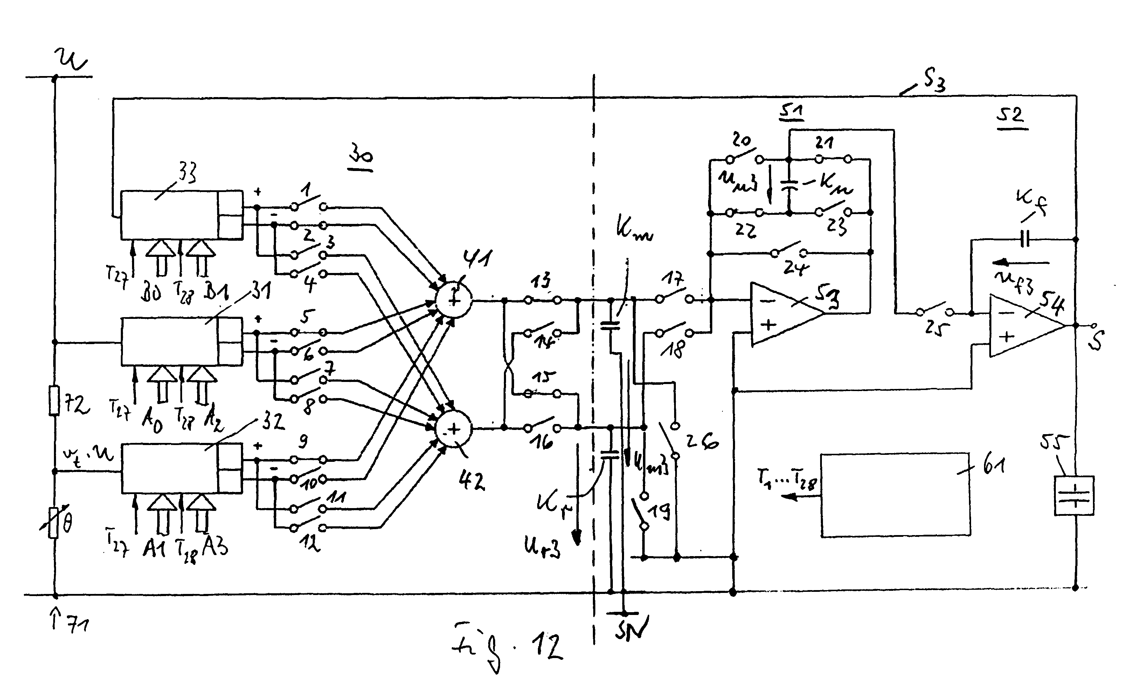

Im folgenden wird nun anhand der Fig. 10 bis 18 die Funktion eines der obigen Ausführungsbeispiele der Erfindung näher erläutert; es wird das Ausführungsbeispiel nach den Fig. 3 und 5 für den Fall beschrieben, daß das zweite Referenzpotential $U_r$ gleich dem des ersten Referenzpotentials SN und dieses gleich dem des Schaltungsnullpunkts ist. Es wird also das zum Kapazitätsverhältnis $C_{V1} = (C_m - C_r)/C_m$ gehörende Ausführungsbeispiel zugrunde gelegt.

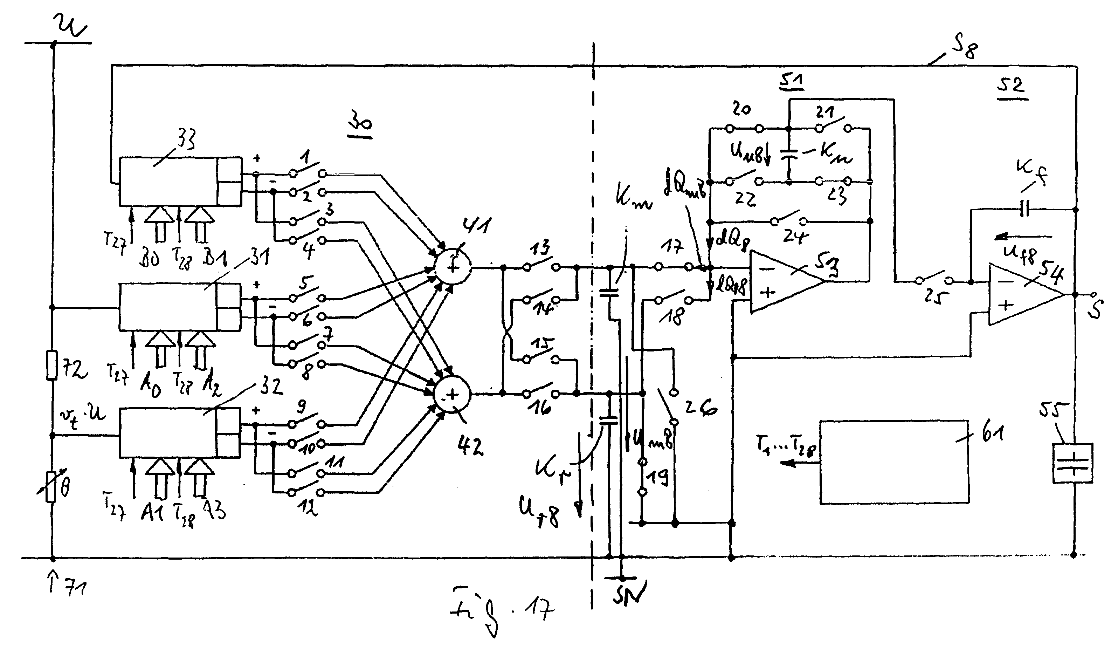

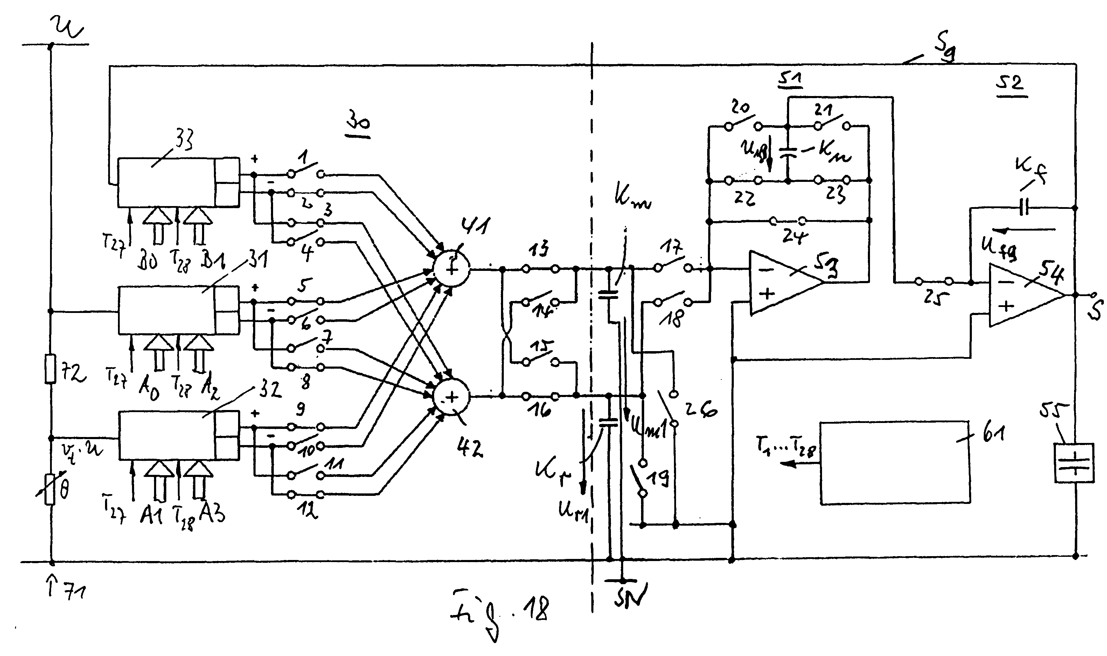

Die Fig. 10 bis 17 zeigen jeweils den für eine der acht Periodendauern $D_1 ... D_8$ von Fig. 5 geltenden Zustand der Schalter 1 ... 26, und die Fig. 18 zeigt den auf die Periodendauer $D_8$ der Fig. 17 folgenden Zustand der nächsten Periodendauer $D_9$, die bezüglich der Taktsignale identisch mit der Periodendauer $D_1$ ist. In den Fig. 10 bis 18 sind die von den jeweiligen H-Pegeln der Taktsignale $T_1 ... T_{26}$ leitend gesteuerten Schalter mittels des Symbols eines geschlossenen Schalters dargestellt.

In die Fig. 10 bis 18 sind ferner Spannungspfeile für die momentanen Spannungen $U_m$, $U_r$, $U_u$, $U_f$ an den Kondensatoren $K_m$, $K_r$, $K_u$, $K_f$ sowie in einige dieser Figuren Strompfeile für die fließenden Ladungen $dQ_m$, $dQ_r$, $dQ$ eingezeichnet. Die Spannungen $U_m$, $U_r$, $U_u$, $U_f$ und die Ladungen $dQ_m$, $dQ_r$, $dQ$ sind jeweils mit derselben Indexzahl 1 ... 9 versehen, die die zugehörige Periodendauer hat; $U_{m1}$ gehört also zur Periodendauer $D_1$. Schließlich sind im folgenden mit $C_u$ bzw. $C_f$ die Kapazitäten der Kondensatoren $K_u$ bzw. $_{Kf}$ bezeichnet.

Der Schalterzustand während der Periodendauer $D_1$ ist in Fig. 10 gezeigt; dann sind die Schalter 2, 3, 5, 8, 9, 12, 13, 16, 22, 23, 24, 25 geschlossen. Somit wirkt nur die Einstellschaltung 30 auf die Kondensatoren $K_m$, $K_r$ ein, da die anderen Schalter, insb. die Schalter 17, 18, 19, 26, geöffnet sind. Das Taktsignal $T_{28}$ läßt die Digitalsignale $A_2$, $A_3$, $B_1$ zur Wandlung durch die drei Digital/Analog-Wandler 31, 32, 33 und somit die analogen Signale $\pm a_2$, $\pm a_3$, $\pm b_1$ an deren jeweiligen Ausgang gelangen. Es werden somit die Signale $+a_2$, $+a_3$, $-b_1$ zum Summierer 41 und die Signale $-a_2$, $-a_3$, $+b_1$ zum Summierer 42 durchgeschaltet.

Es gelten daher die folgenden Gleichungen:

$$U_{m1} = -b_1 \cdot S + (a_2 + a_3 \cdot v_t) \cdot U \qquad (1_1)$$

$$U_{r1} = +b_1 \cdot S - (a_2 + a_3 \cdot v_t) \cdot U \qquad (2_1)$$

$$U_{u1} = 0 \qquad (4_1)$$

$$U_{f1} = S \qquad (5_1)$$

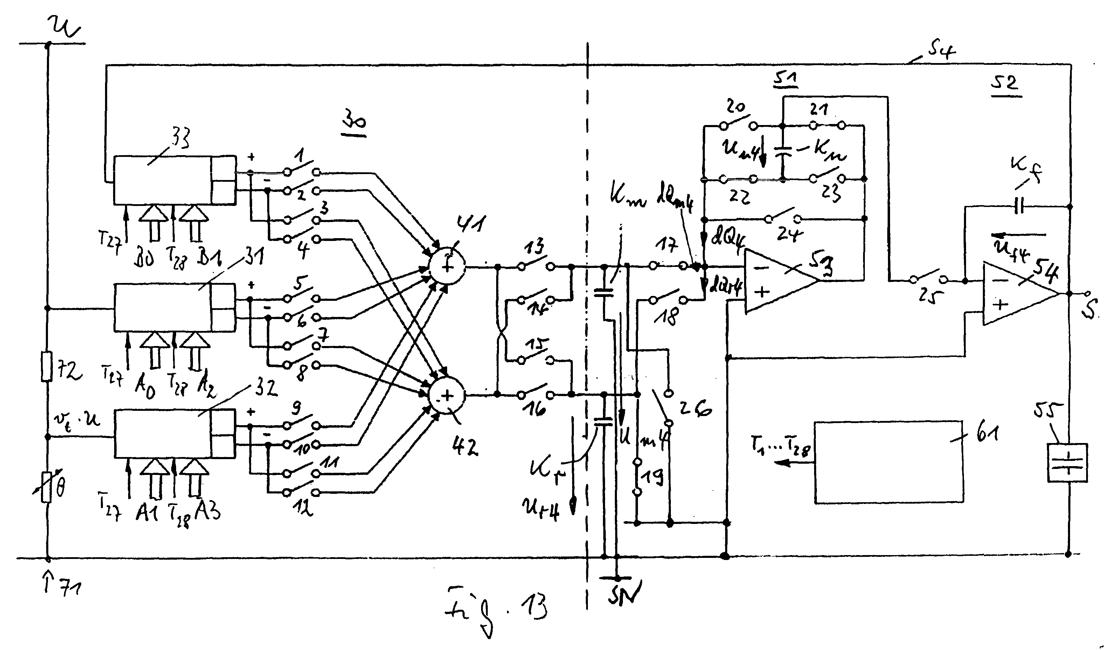

Der Schalterzustand während der Periodendauer $D_2$ ist in Fig. 11 gezeigt; dann sind die Schalter 17, 18, 21, 22 geschlossen. Somit ist die Einstellschaltung 30 von den Kondensatoren $K_m$, $K_r$ abgeschaltet, und deren Ladungen werden auf den Kondensator $K_u$ übertragen, da alle anderen Schalter geöffnet sind und da der invertierende Eingang des Operationsverstärkers 53 virtuell auf dem Potential des Schaltungsnullpunkts, also auf 0 V, liegt und somit auch die jeweiligen beiden Anschlüsse der Kondensatoren $K_m$, $K_r$ während der Periodendauer $D_2$ auf 0 V liegen.

Es gelten daher die folgenden Gleichungen:

$$dQ_{m2} = (U_{m2} - U_{m1}) \cdot C_m = -[-b_1 \cdot S + (a_2 + a_3 \cdot v_t) \cdot U] \cdot C_m \qquad (1_2)$$

$$dQ_{r2} = (U_{r2} - U_{r1}) \cdot C_r = -[+b_1 \cdot S - (a_2 + a_3 \cdot v_t) \cdot U] \cdot C_r \qquad (2_2)$$

$$dQ_2 = dQ_{m2} + dQ_{r2} = +[+b_1 \cdot S - (a_2 + a_3 \cdot v_t) \cdot U](C_m - C_r) \qquad (3_2)$$

$$U_{u2} = U_{u1} - dQ_2/C_u = +[+b_1 \cdot S - (a_2 + a_3 \cdot v_t) \cdot U](C_m - C_r)/C_u \qquad (4_2)$$

$$U_{f2} = S \qquad (5_2)$$

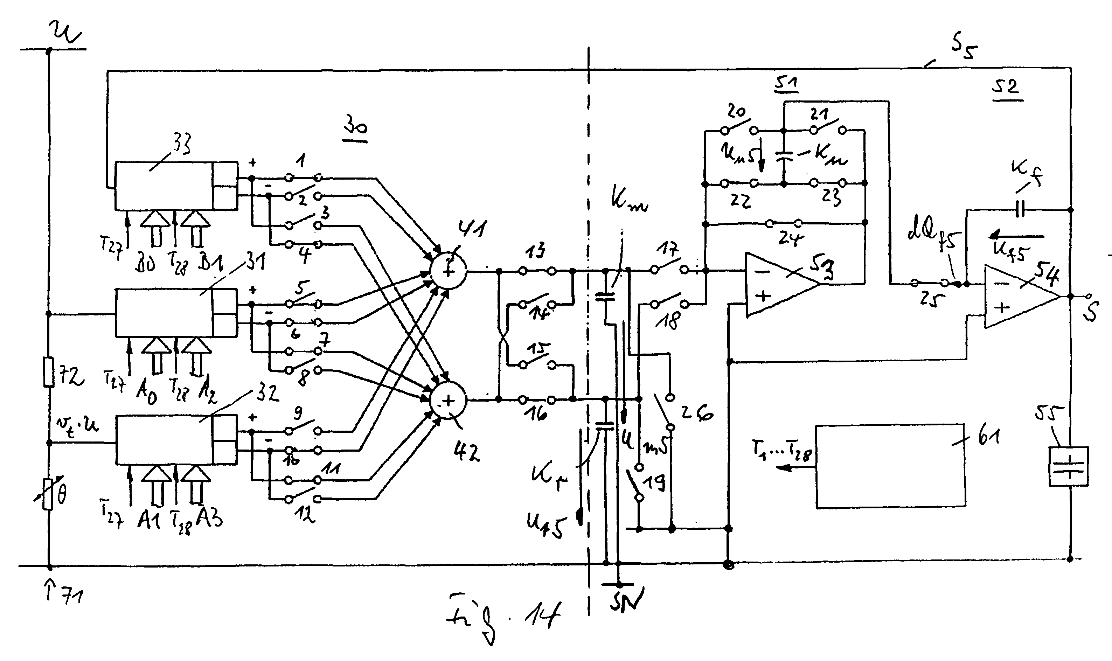

Der Schalterzustand während der Periodendauer $D_3$ ist in Fig. 12 gezeigt; dann sind die Schalter 2, 5, 9, 13, 15, 21, 22 geschlossen. Somit speist die Einstellschaltung 30 die Kondensatoren $K_m$, $K_r$ allerdings mit anderen Spannungen als in Fig. 10 gezeigt. Alle anderen Schalter sind geöffnet. Das Taktsignal $T_{27}$ läßt die Digitalsignale $A_0$, $A_1$, $B_0$ zur Wandlung durch die drei Digital/Analog-Wandler 31, 32, 33 und somit die analogen Signale $\pm a_0$, $\pm a_1$, $\pm b_0$ an deren jeweiligen Ausgang gelangen. Es werden somit die Signale $+a_0$, $+a_1$, $-b_0$ zum Summierer 41 durchgeschaltet, während der Summierer 42 keine Signale zugeführt erhält.
Es gelten somit die folgenden Gleichungen:

$$U_{m3} = -b_0 \cdot S + (a_0 + a_1 \cdot v_t) \cdot U \qquad (1_3)$$

$$U_{r3} = U_{m3} = -b_0 \cdot S + (a_0 + a_1 \cdot v_t) \cdot U \qquad (2_3)$$

$$U_{u3} = U_{u2} = +[+b_1 \cdot S - (a_2 + a_3 \cdot v_t) \cdot U](C_m - C_r)/C_u \qquad (4_3)$$

$$U_{f3} = S \qquad (5_3)$$

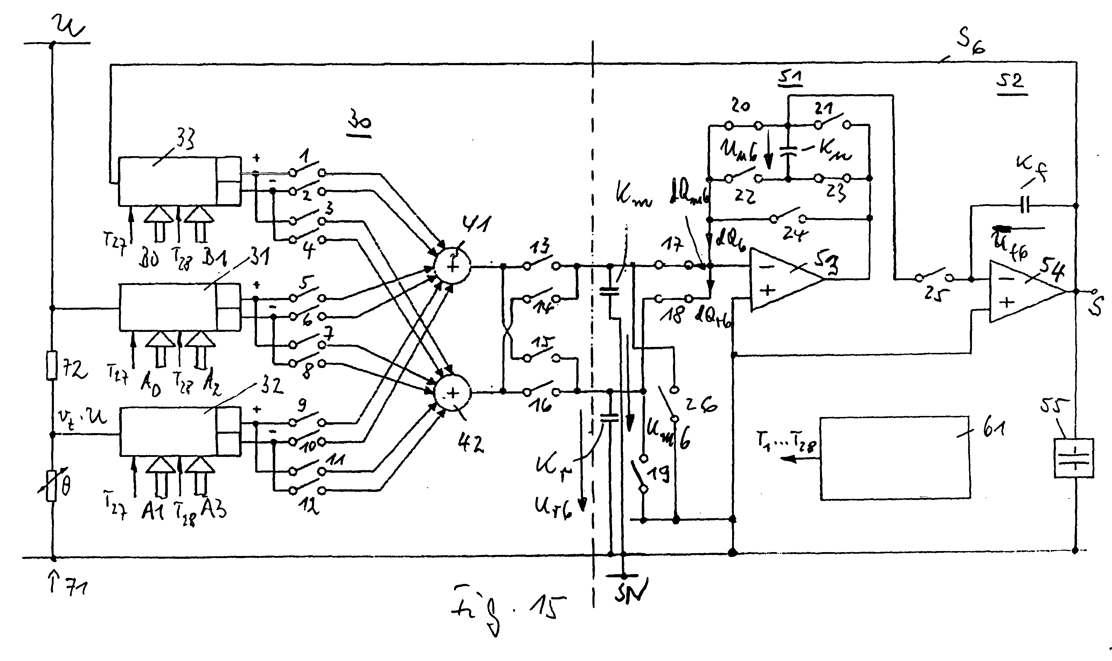

Der Schalterzustand während der Periodendauer $D_4$ ist in Fig. 13 gezeigt; dann sind die Schalter 17, 19, 21, 22 geschlossen. Somit ist die Einstellschaltung 30 von den Kondensatoren $K_m$, $K_r$ abgeschaltet und zusätzlich wird die Ladung auf dem Kondensator $K_r$ zum Schaltungsnullpunkt abgeleitet, so daß nur die Ladung des Kondensator $K_m$ auf den Kondensator $K_u$ übertragen wird, da alle anderen Schalter geöffnet sind und da der invertierende Eingang des Operationsverstärkers 53 virtuell auf dem Potential des Schaltungsnullpunkts, also auf 0 V, liegt und somit auch die Anschlüsse des Kondensators $K_m$ während der Periodendauer $D_4$ auf 0 V liegen.
Es gelten daher die folgenden Gleichungen:

$$dQ_{m4} = (U_{m4} - U_{m3}) \cdot C_m = -[-b_0 \cdot S + (a_0 + a_1 \cdot v_t) \cdot U] \cdot C_m \qquad (1_4)$$

$$dQ_{r4} = U_{r4} = 0 \qquad (2_4)$$

$$dQ_4 = dQ_{m4} = -[-b_0 \cdot S + (a_0 + a_1 \cdot v_t) \cdot U] \cdot C_m \qquad (3_4)$$

$$U_{u4} = U_{u3} + dQ_4/C_u = [b_1 \cdot S - (a_2 + a_3 \cdot v_t) \cdot U] \cdot (C_m - C_r)/C_u$$

$$- [-b_0 \cdot S + (a_0 + a_1 \cdot v_t) \cdot U] \cdot C_m/C_u \qquad (4_4)$$

$$U_{f4} = U_{f3} = U_{f2} = S \qquad (5_4)$$

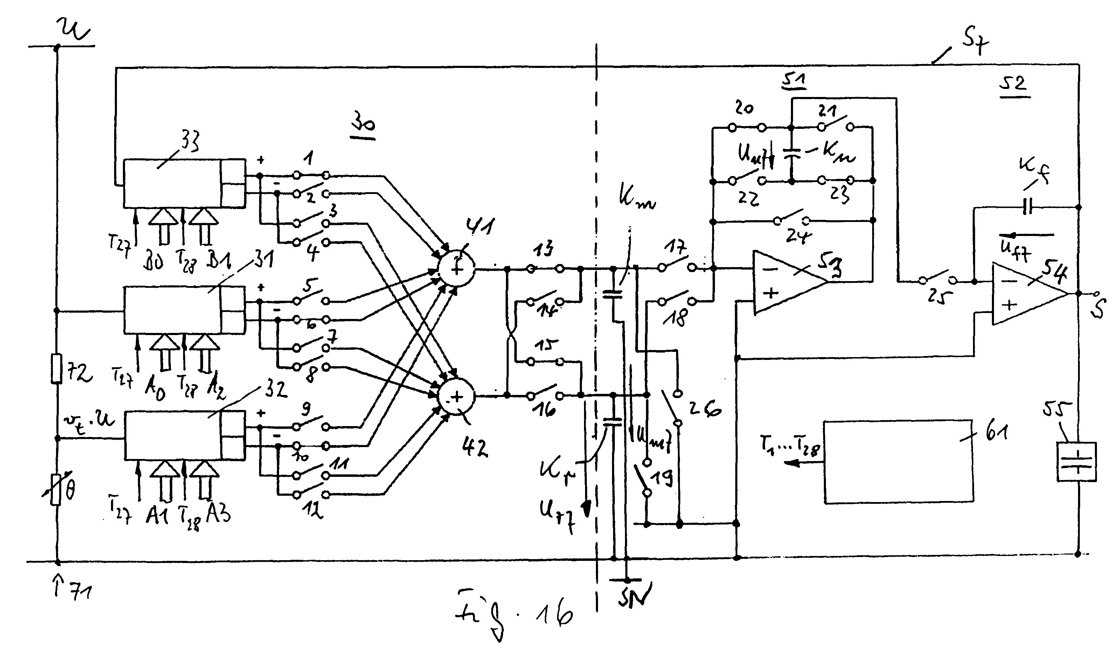

Der Schalterzustand während der Periodendauer $D_5$ ist in Fig. 14 gezeigt; dann sind die Schalter 1, 4, 6, 7, 10, 11, 13, 16, 22, 23, 24, 25 geschlossen. Somit speist die Einstellschaltung 30 die Kondensatoren $K_m$, $K_r$, allerdings mit anderen Spannungen als in den Fig. 10 und 12 gezeigt. Alle anderen Schalter sind geöffnet. Das Taktsignal $T_{28}$ läßt zwar wieder wie bei Fig. 10 die Digitalsignale $A_2$, $A_3$, $B_1$ zur Wandlung durch die drei Digital/Analog-Wandler 31, 32, 33 und somit die analogen Signale $\pm a_2$, $\pm a_3$, $\pm b_1$ an deren jeweiligen Ausgang gelangen; es werden nun aber nicht die Signale von Fig. 10, sondern die entsprechenden inversen Signale zu den Summierern 41, 42 durchgeschaltet, nämlich die Signale $-a_2$, $-a_3$, $+b_1$ zum Summierer 41 und die Signale $+a_2$, $+a_3$, $-b_1$ zum Summierer 42.

Es gelten somit die folgenden Gleichungen:

$$U_{m5} = +b_1 \cdot S - (a_2 + a_3 \cdot v_t) \cdot U \qquad (1_5)$$

$$U_{r5} = -b_1 \cdot S + (a_2 + a_3 \cdot v_t) \cdot U \qquad (2_5)$$

$$dQ_{f5} = (U_{u5} - U_{u4}) \cdot C_u =$$

$$= -[+b_1 \cdot S - (a_2 + a_3 \cdot v_t) \cdot U] \cdot (C_m - C_r)$$

$$-[+b_0 \cdot S - (a_0 + a_1 \cdot v_t) \cdot U] \cdot C_m$$

$$= -k_1 \cdot (C_m - C_r) - k_2 \cdot C_m \qquad (3_5)$$

$$U_{u5} = 0 \qquad (4_5)$$

$$U_{f5} = U_{f4} + dQ_{f5}/C_f$$

$$= S - k_1 \cdot (C_m - C_r)/C_f - k_2 \cdot C_m/C_f \qquad (5_5)$$

Der Schalterzustand während der Periodendauer $D_6$ ist in Fig. 15 gezeigt; dann sind die Schalter 17, 18, 20, 23 geschlossen. Somit ist die Einstellschaltung 30 von den Kondensatoren $K_m$, $K_r$ abgeschaltet, und deren Ladungen werden auf den Kondensator $K_u$ übertragen, da alle anderen Schalter geöffnet sind und da der invertierende Eingang des Operationsverstärkers 53 virtuell auf dem Potential des Schaltungsnullpunkts, also auf 0 V, liegt und somit auch die jeweiligen beiden Anschlüsse der Kondensatoren $K_m$, $K_r$ während der Periodendauer $D_6$ auf 0 V liegen.
Es gelten daher die folgenden Gleichungen:

$$dQ_{m6} = (U_{m6} - U_{m5}) \cdot C_m = -[+b_1 \cdot S - (a_2 + a_3 \cdot v_t) \cdot U] \cdot C_m \qquad (1_6)$$

$$dQ_{r6} = (U_{r6} - U_{r5}) \cdot C_r = -[-b_1 \cdot S + (a_2 + a_3 \cdot v_t) \cdot U] \cdot C_r \qquad (2_6)$$

$$dQ_6 = dQ_{m6} + dQ_{r6} = -[+b_1 \cdot S - (a_2 + a_3 \cdot v_t) \cdot U](C_m - C_r)$$

$$= -k_3 \cdot (C_m - C_r) \qquad (3_6)$$

$$U_{u6} = U_{u5} - dQ_6/C_u = k_3 \cdot (C_m - C_r)/C_u \qquad (4_6)$$

$$U_{f6} = U_{f5} = S - k_1 \cdot (C_m - C_r)/C_f - k_2 \cdot C_m/C_f \qquad (5_6)$$

Der Schalterzustand während der Periodendauer $D_7$ ist in Fig. 16 gezeigt; dann sind die Schalter 1, 6, 10, 13, 15, 20, 23 geschlossen. Somit speist die Einstellschaltung 30 die Kondensatoren $K_m$, $K_r$ allerdings mit anderen Spannungen als in Fig. 10 gezeigt. Alle anderen Schalter sind geöffnet. Das Taktsignal $T_{27}$ läßt die Digitalsignale $A_0$, $A_1$, $B_0$ zur Wandlung durch die drei Digital/Analog-Wandler 31, 32, 33 und somit die analogen Signale $\pm a_0$, $\pm a_1$, $\pm b_0$ an deren jeweiligen Ausgang gelangen. Es werden somit die Signale $-a_0$, $-a_1$, $+b_0$ zum Summierer 41 durchgeschaltet, während der Summierer 42 keine Signale zugeführt erhält.
Es gelten somit die folgenden Gleichungen:

$$U_{m7} = k_2 = +b_0 \cdot S - (a_0 + a_1 \cdot v_t) \cdot U \qquad (1_7)$$

$$U_{r7} = U_{m7} = k_2 \qquad (2_7)$$

$$U_{u7} = U_{u6} = +k_3 \cdot (C_m - C_r)/C_u \qquad (4_7)$$

$$U_{f7} = U_{f6} = S - k_1 \cdot (C_m - C_r)/C_f - k_2 \cdot C_m/C_f \qquad (5_7)$$

Der Schalterzustand während der Periodendauer $D_8$ ist in Fig. 17 gezeigt; dann sind die Schalter 17, 19, 20, 23 geschlossen. Somit ist die Einstellschaltung 30 von den Kondensatoren $K_m$, $K_r$ abgeschaltet und zusätzlich wird die Ladung auf dem Kondensator $K_r$ zum Schaltungsnullpunkt abgeleitet, so daß nur die Ladung des Kondensator $K_m$ auf den Kondensator $K_u$ übertragen wird, da alle anderen Schalter geöffnet sind und da der invertierende Eingang des Operationsverstärkers 53 virtuell auf dem Potential des Schaltungsnullpunkts, also auf 0 V, liegt und somit auch die Anschlüsse des Kondensators $K_m$ während der Periodendauer $D_8$ auf 0 V liegen.

Es gelten daher die folgenden Gleichungen:

$$dQ_{m8} = (U_{m8} - U_{m7}) \cdot C_m = -[+b_0 \cdot S - (a_0 + a_1 \cdot v_t) \cdot U] \cdot C_m$$

$$= -k_4 \cdot C_m \qquad (1_8)$$

$$dQ_{r8} = U_{r8} = 0 \qquad (2_8)$$

$$dQ_8 = dQ_{m8} = -k_4 \cdot C_m \qquad (3_8)$$

$$U_{u8} = U_{u7} - dQ_8/C_u = +k_3 \cdot (C_m - C_r)/C_u + k_4 \cdot C_m/C_u \qquad (4_8)$$

$$U_{f8} = U_{f7} = S - k_1 \cdot (C_m - C_r)/C_f - k_2 \cdot C_m/C_f \qquad (5_8)$$

Ein vollständiger Zyklus wird mit der folgenden Periodendauer $D_9$ abgeschlossen, die der Periodendauer $D_1$ entspricht. Der Schalterzustand während der Periodendauer $D_9$ ist in Fig. 18 gezeigt; dann sind zwar einerseits die Schalter 2, 3, 5, 8, 9, 12, 13, 16, 22, 23, 24, 25 wieder wie bei Fig. 10 geschlossen. Somit wirkt nur die Einstellschaltung 30 auf die Kondensatoren $K_m$, $K_r$ ein, da die anderen Schalter, insb. die Schalter 17, 18, 19, 26, geöffnet sind. Das Taktsignal $T_{28}$ läßt die - u. U. neuen - Digitalsignale $A_2$, $A_3$, $B_1$ zur Wandlung durch die drei Digital/Analog-Wandler 31, 32, 33 und somit die analogen Signale $\pm a_2$, $\pm a_3$, $\pm b_1$ an deren jeweiligen Ausgang gelangen. Es werden somit wieder die Signale $+a_2$, $+a_3$, $-b_1$ zum Summierer 41 und die Signale $-a_2$, $-a_3$, $+b_1$ zum Summierer 42 durchgeschaltet.

Andererseits erfolgen zwischen den Kondensatoren $K_u$, $K_f$ der Integratoren 51, 52 Umladungen, die, da die Schalter 17, 18 geöffnet sind, nicht auf den Meß- und den Referenz-Kondensator $K_m$, $K_r$ einwirken.

Außer den obigen Gleichungen $(1_1) ... (5_1)$ gelten daher die folgenden Gleichungen:

$$dQ_{f9} = (U_{u9} - U_{u8}) \cdot C_u$$

$$= [-k_3 \cdot (C_m - C_r)/C_u - k_4 \cdot C_m/C_u] \cdot C_u \qquad (1_9)$$

$$U_{u9} = 0 \qquad (4_9)$$

$$U_{f9} = U_{f8} + dQ_{f9}/C_f$$

$$= S - (k_1 + k_3)(C_m - C_r)/C_f - (k_2 + k_4)C_m/C_f \qquad (5_9)$$

Verallgemeinert gilt, wenn mit i die Laufzahl der Zyklen von acht Periodendauern $D_1 \ldots D_8$ bezeichnet wird:

$$S_{8 \cdot (i+1)+1} = S_{8 \cdot i+1} - (k_1 + k_3)(C_m - C_r)/C_f - (k_2 + k_4)C_m/C_f \qquad (6)$$

Für z.B. i = 0 wird aus Gleichung (6):

$$S_9 = S_1 - (k_1 + k_3)(C_m - C_r)/C_f - (k_2 + k_4)C_m/C_f \qquad (7)$$

Wenn ideale Operationsverstärker vorausgesetzt werden, gelten im eingeschwungenen Zustand folgende Gleichungen:

$$S_{8 \cdot (i+1)+1} = S_{8 \cdot i+1}; \; k_1 = k_3; \; k_2 = k_4.$$

Somit muß die Summe aus dem zweiten und dem dritten Term auf der rechten Seite der Gleichung (6) zu null werden:

$$2(Sb_1 - Ua_2 - Ua_3 v_t)(C_m - C_r)/C_f + 2(Sb_0 - Ua_0 - Ua_1 v_t)C_r/C_f$$

$$= S(b_0 + b_1 C_{v1}) - U[a_0 + a_1 v_t + (a_2 + a_3 v_t)C_{V1}] = 0$$

$$S = U \cdot \frac{a_0 + a_1 v_t + (a_2 + a_3 v_t)C_{V1}}{b_0 + b_1 C_{v1}}. \qquad (8)$$

Gleichung (8) ist aber identisch mit der in Anspruch 1 angegebenen, von der Anordnung der Erfindung zu erfüllenden Beziehung.

**Patentansprüche**

1. Anordnung zur Linearisierung und zur Temperatur-Kompensation von Sensorsignalen kapazitiver Sensoren, die umfaßt:

   - einen Meß-Kondensator ($K_m$)
   - einen die Temperatur des Meß-Kondensators messenden, zwischen einem Betriebspotential (U) und einem ersten Referenzpotential (SN), insb. dem Schaltungsnullpunkt, liegenden temperatur-abhängigen Spannungsteiler (71) mit einem resistiven Temperatursensor ($\Theta$),
   - eine auf den Meß-Kondensator und einen Referenz-Kondensator ($K_r$) mittels Analogsignalen einwirkende, getaktete Einstellschaltung (30) des Ausgangssignals (S) der Anordnung,

     -- wobei ein erster Eingang der Einstellschaltung am Betriebspotential und ein zweiter Eingang der Einstellschaltung am Temperatursensor liegt,

   - eine an den Meß-Kondensator und den Referenz-Kondensator getaktet angeschlossene Integrierstufe (50),

     -- deren Ausgang mit einem dritten Eingang der Einstellschaltung verbunden ist und der Ausgang der Anordnung ist, und

   - einen Taktgenerator (61),

-- wobei das Ausgangssignal, S, folgender Gleichung gehorcht:

$$S = \frac{U \cdot [a_0 + a_1 \cdot v_t + (a_2 + a_3 \cdot v_t) \cdot C_V]}{b_0 + b_1 \cdot C_V},$$

--- worin bedeuten:

| | |
|---|---|
| $C_V$ | eines der folgenden Kapazitätsverhältnisse: |
| $C_{V1} =$ | $(C_m - C_r)/C_m$, |
| $C_{V2} =$ | $(C_m - C_r)/(C_m + C_r)$ oder |
| $C_{V3} =$ | $(C_m - C_r)/C_r$; |
| $C_m$ | die Kapazität des Meß-Kondensators, |
| $C_r$ | die Kapazität des Referenz-Kondensators, |
| U | die Spannung der Betriebsspannungsquelle, |
| $a_0$ | einen Nullpunkt-Einstellwert, |
| $a_1$ | einen Temperaturkoeffizient-Einstellwert des Nullpunkts, |
| $a_2$ | einen ersten Spanne-Einstellwert, |
| $a_3$ | einen Temperaturkoeffizient-Spanne-Einstellwert, |
| $b_0$ | einen zweiten Spanne-Einstellwert, |
| $b_1$ | einen Linearisierungs-Einstellwert und |
| $v_t$ | das temperatur-abhängige Widerstandsverhältnis des temperatur-abhängigen Spannungsteilers. |

2. Anordnung nach Anspruch 1 mit einer Integrierstufe (50),

- die einen ersten Integrator (51) mit einem getaktet umzupolenden Kondensator ($K_u$) und
- einen am Ausgang des ersten Integrators getaktet liegenden zweiten Integrator (52) enthält.

3. Anordnung nach Anspruch 1 mit einer Einstellschaltung (30), die umfaßt:

- einen ersten, ein positives und ein negatives Wandlersignal abgebenden Digital/Analog-Wandler (31),

-- dessen Referenz-Eingang der erste Eingang der Einstellschaltung ist,
-- an dessen erstem Signaleingang der digitalisierte Nullpunkt-Einstellwert, $A_0$ liegt,
-- an dessen zweitem Signaleingang der digitalisierte erste Spanne-Einstellwert, $A_2$ liegt, und
-- dessen erster sowie dessen zweiter Signal-Enable-Eingang vom Taktoszillators (61) angesteuert sind,

- einen zweiten, ein positives und ein negatives Wandlersignal abgebenden Digital/Analog-Wandler (32),

-- dessen Referenz-Eingang der zweite Eingang der Einstellschaltung ist,
-- an dessen erstem Signaleingang der digitalisierte Temperaturkoeffizient-Einstellwert, $A_1$, des Nullpunkts,
-- an dessen zweitem Signaleingang der digitalisierte Temperaturkoeffizient-Spanne-Einstellwert, $A_3$, und
-- dessen erster sowie dessen zweiter Signal-Enable-Eingang vom Taktoszillators (61) angesteuert sind,

- einen dritten, ein positives und ein negatives Wandlersignal abgebenden Digital/Analog-Wandler (33),

-- dessen Referenz-Eingang der dritte Eingang der Einstellschaltung ist,

-- an dessen erstem Signaleingang der digitalisierte zweite Spanne-Einstellwert, $B_0$ liegt,

-- an dessen zweitem Signaleingang der digitalisierte Linearisierungs-Einstellwert, $B_1$ liegt, und

-- dessen erster sowie dessen zweiter Signal-Enable-Eingang vom Taktoszillators (61) angesteuert sind,

- einen ersten und einen zweiten Summierer (41, 42) mit jeweils einem Ausgang und mit jeweils sechs Eingängen, von denen

-- dem ersten bzw. dem zweiten Eingang des ersten Summierers (41) über einen ersten bzw. einen zweiten Schalter (1, 2) das positive bzw. das negative Wandlersignal des dritten Digital/Analog-Wandlers (33) zugeführt ist,

-- dem ersten bzw. dem zweiten Eingang des zweiten Summierers (42) über einen dritten bzw. einen vierten Schalter (3, 4) das positive bzw. das negative Wandlersignal des dritten Digital/Analog-Wandlers (33) zugeführt ist,

-- dem dritten bzw. dem vierten Eingang des ersten Summierers (41) über einen fünften bzw. einen sechsten Schalter (5, 6) das positive bzw. das negative Wandlersignal des ersten Digital/Analog-Wandlers (31) zugeführt ist,

-- dem dritten bzw. vierten Eingang des zweiten Summierers (42) über einen siebten bzw. einen achten Schalter (7, 8) das positive bzw. das negative Wandlersignal des ersten Digital/Analog-Wandlers (31) zugeführt ist,

-- dem fünften bzw. dem sechsten Eingang des ersten Summierers (41) über einen neunten bzw. einen zehnten Schalter (9, 10) das positive bzw. das negative Wandlersignal des zweiten Digital/Analog-Wandlers (32) zugeführt ist und

-- dem fünften bzw. dem sechsten Eingang des zweiten Summierers (42) über einen elften bzw. einen zwölften Schalter (11, 12) das positive bzw. das negative Wandlersignal des zweiten Digital/Analog-Wandlers (32) zugeführt ist, wobei

--- der Ausgang des ersten Summierers (41) über einen 13. Schalter (13) und der Ausgang des zweiten Summieres (42) über einen 14. Schalter (14) am Meß-Kondensator (Km) sowie

--- der Ausgang des ersten Summierers (41) über einen 15. Schalter (15) und der Ausgang des zweiten Summieres (42) über einen 16. Schalter (16) am Referenz-Kondensator ($K_r$) liegt sowie

--- der jeweilige schalter-abgewandte Anschluß von Meß-bzw. Referenz-Kondensator am ersten Referenzpotential (SN) liegen.

4. Anordnung nach Anspruch 2 für das Kapazitätverhältnis $C_{V1} = (C_m - C_r)/C_m$ oder $C_{V2} = (C_m - C_r)/(C_m + C_r)$ mit einem ersten Integrator (51), der umfaßt:

- einen ersten Operationsverstärker (53),

-- dessen invertierender Eingang über einen
17. Schalter (17) am Meß-Kondensator (Km) und über einen 18. Schalter (18) am Referenz-Kondensator ($K_r$) liegt,

--- wobei der Verbindungspunkt von 18. Schalter und Referenz-Kondensator über einen 19. Schalter (19) an einem zweiten Referenzpotential ($U_r$) liegt,

-- dessen nicht-invertierender Eingang ebenfalls am zweiten Referenzpotential ($U_r$) liegt,

-- dessen invertierender Eingang mit dem Ausgang über drei Parallelzweige verbunden ist,

--- von denen der erste Parallelzweig aus der Serienschaltung eines 20. und eines 21. Schalters (20, 21),

--- von denen der zweite Parallelzweig aus der Serienschaltung eines 22. und eines 23. Schalters (22, 23) sowie

--- von denen der dritte Parallelzweig aus einem 24. Schalter (24) besteht,

--- wobei der umzupolende Kondensator ($K_u$) zwischen dem Verbindungspunkt des 20. mit dem 21. Schalter und dem Verbindungspunkt des 22. mit dem 23. Schalter liegt.

5. Anordnung nach Anspruch 2, mit einem zweiten Integrator (52), der umfaßt:

- einen zweiten Operationsverstärker (54),

-- dessen invertierender Eingang über einen 25. Schalter (25) am Verbindungspunkt des 20. mit dem 21. Schalter und über einen Festkondensator ($K_f$) an Ausgang der Anordnung liegt und

-- dessen nicht-invertierender Eingang mit dem zweiten Referenzpotential ($U_r$) verbunden ist.

6. Anordnung nach Anspruch 4 für das Kapazitätverhältnis $C_{V3} = (C_m - C_r)/C_r$ mit einem 26. Schalter (26), der zwischen dem zweiten Referenzpotential ($U_r$) und dem Verbindungspunkt von 17. Schalter (17) und Meß-Kondensator

(K$_m$) liegt.

7. Anordnung nach Anspruch 1 mit einer am Ausgang der Integrierstufe (50) liegenden Glättungsstufe (55).

8. Anordnung nach den Ansprüchen 1 bis 7 mit einem Taktoszillator (61), der zur Ansteuerung der 26 Schalter (1 ... 26) und des jeweiligen Signal-Enable-Eingangs der drei Digital/Analog-Wandler (31, 32, 33) Taktsignale (T$_1$ ... T$_{28}$) mit einem positiven oder einem hierzu negativeren Pegel (H, L), ausgehend von einem Grundtakt, erzeugt, wobei der jeweilige Pegel mindestens während eines Achtels der Periodendauer des Grundtaktes auftritt.

**Claims**

1. An arrangement for the linearization and temperature compensation of sensor signals from capacitive sensors which comprises:

   - a measuring capacitor (K$_m$);
   - a temperature-dependent voltage divider (71) with a resistive temperature sensor (e) connected between an operating potential (U) and a first reference potential (SN), particularly ground, and measuring the temperature of the measuring capacitor;
   - a clocked adjusting circuit (30) for the output signal (S) of the arrangement which acts on the measuring capacitor and a reference capacitor (K$_r$) by means of analog signals,

     -- with a first input of the adjusting circuit connected to the operating potential, and a second input to the temperature sensor;

   - an integrating stage (50) connectable under clock control to the measuring capacitor and the reference capacitor

     -- whose output is connected to a third input of the adjusting circuit and is the output of the arrangement; and

   - a clock generator (61),

     -- with the output signal, S, obeying the following equation:

   $$S = \frac{U \cdot [a_0 + a_1 \cdot v_t + (a_2 + a_3 \cdot v_t) \cdot C_V]}{b_0 + b_1 \cdot C_V},$$

     -- where

     | | |
     |---|---|
     | C$_V$ | is one of the following capacitance ratios: |
     | C$_{V1}$ = | (C$_m$ - C$_r$)/C$_m$, |
     | C$_{V2}$ = | (C$_m$ - C$_r$)/(C$_m$ + C$_r$), |
     | C$_{V3}$ = | (C$_m$ - C$_r$)/C$_r$; |
     | C$_m$ | is the capacitance of the measuring capacitor; |
     | C$_r$ | is the capacitance of the reference capacitor; |
     | U | is the operating potential; |
     | a$_0$ | is a zero adjustment value; |
     | a$_1$ | is a temperature coefficient zero adjustment value; |
     | a$_2$ | is a first span adjustment value; |
     | a$_3$ | is a temperature coefficient span adjustment value; |
     | b$_0$ | is a second span adjustment value; |
     | b$_1$ | is a linearization adjustment value, and |
     | v$_t$ | is the temperature-dependent resistance ratio of the voltage divider. |

2. The arrangement as claimed in claim 1 wherein the integrating stage (50) contains a first integrator (51) and a second integrator (52), the first integrator comprising a capacitor (K$_u$) whose polarity must be reversed under clock control, and the second integrator being connectable under clock control to the output of the first integrator.

**3.** The arrangement as claimed in claim 1 wherein the adjusting circuit (30) comprises:

- a first digital-to-analog converter (31) providing a positive converter signal and a negative converter signal,

-- whose reference input is the first input of the adjusting circuit,
-- whose first signal input is supplied with the digitized zero adjustment value, $A_0$,
-- whose second signal input is supplied with the digitized first span adjustment value, $A_2$, and
-- whose first and second signal enable inputs are controlled by the clock generator (61);

- a second digital-to-analog (32) converter providing a positive converter signal and a negative converter signal,

-- whose reference input is the second input of the adjusting circuit,
-- whose first signal input is supplied with the digitized temperature coefficient zero adjustment value, $A_1$,
-- whose second signal input is supplied with the digitized temperature coefficient span adjustment value, $A_3$, and
-- whose first and second signal enable inputs are controlled by the clock generator (61);

- a third digital-to-analog (33) converter providing a positive converter signal and a negative converter signal,

-- whose reference input is the third input of the adjusting circuit,
-- whose first signal input is supplied with the digitized second span adjustment value, $B_0$,
-- whose second signal input is supplied with the digitized linearization adjustment value, $B_1$, and
-- whose first and second signal enable inputs are controlled by the clock generator;

- a first summer and a second summer (41, 42) each having one output and six inputs,

-- the first and second inputs of the first summer (41) receiving, respectively, the positive and negative converter signals of the third digital-to-analog converter (33) via a first switch and a second switch (1, 2),
-- the first and second inputs of the second summer (42) receiving, respectively, the positive and negative converter signals of the third digital-to-analog converter (33) via a third switch and a fourth switch (3, 4),
-- the third and fourth inputs of the first summer (41) receiving, respectively, the positive and negative converter signals of the first digital-to-analog converter (31) via a fifth switch and a sixth switch (5, 6),
-- the third and fourth inputs of the second summer (42) receiving, respectively, the positive and negative converter signals of the first digital-to-analog converter (31) via a seventh switch and an eighth switch (7, 8),
-- the fifth and sixth inputs of the first summer (41) receiving, respectively, the positive and negative converter signals of the second digital-to-analog converter (32) via a ninth switch and a tenth switch (9, 10), and
-- the fifth and sixth inputs of the second summer (42) receiving, respectively, the positive and negative. converter signals of the second digital-to-analog converter (32) via an eleventh switch and a twelfth switch (11, 12), with

--- the output of the first summer (41) and the output of the second summer (42) connected via a 13th switch (13) and a 14th switch (14), respectively, to the measuring capacitor ($K_m$),
--- the output of the first summer (41) and the output of the second summer (42) connected via a 15th switch (15) and a 16th switch (16), respectively, to the reference capacitor ($K_r$), and
--- the respective terminals of the measuring capacitor and reference capacitor remote from the switches connected to the first reference potential (SN).

**4.** The arrangement as claimed in claim 2 wherein for the capacitance ratio $C_{V1} = (C_m - C_r)/C_m$ or the capacitance ratio $C_{V2} = (C_m - C_r)/(C_m + C_r)$ the first integrator comprises (51):

- a first operational amplifier (53),

-- whose inverting input is connected via a 17th switch (17) to the measuring capacitor ($K_m$) and via an 18th switch (18) to the reference capacitor ($K_r$),

--- with the junction of the 18th switch and the reference capacitor connected via a 19th switch (19) to a second reference potential ($U_r$),

-- whose noninverting input is also connected to the second reference potential ($U_r$),

-- whose inverting input is connected to the output via three parallel branches,

--- the first of which consists of a 20th switch and a 21st switch (20, 21) in series,

--- the second of which consists of a 22nd switch and a 23rd switch (22, 23) in series, and

--- the third of which consists of a 24th switch (24),

---- with the capacitor ($K_u$) connected between the junction of the 20th and 21st .switches and the junction of the 22nd and 23rd switches.

5. The arrangement as claimed in claim 2 wherein the second integrator (52) comprises:

- a second operational amplifier (54)

-- whose inverting input is connected via a 25th switch (25) to the junction of the 20th and 21st switches and via a fixed capacitor ($K_f$) to the output of the arrangement, and

-- whose noninverting input is connected to the second reference potential ($U_r$).

6. The arrangement as claimed in claim 4 wherein for the capacitance ratio $C_{V3} = (C_m - C_r)/C_r$, comprising a 26th switch (26 connected between the second reference potential and the junction of the 17th switch and the measuring capacitor.

7. The arrangement as claimed in claim 1 wherein comprising a smoothing stage connected to the output of the integrating stage.

8. The arrangement as claimed in claims 1 to 7 wherein to control the 26 switches and the respective signal enable inputs of the three digital-to-analog converters, the clock generator generates, from a basic clock signal, clock signals having a positive level and a more negative level, the respective level occurring during at least one eighth of the period of the basic clock signal.

**Revendications**

1. Dispositif de linéarisation et de compensation de températures de signaux de capteurs capacitifs comprenant

- un condensateur de mesure ($K_m$),
- un diviseur de tension (71) avec un capteur de températures résistif ($\Theta$) variable avec la température mesurant la température du condensateur de mesure disposé entre un potentiel de service (U) et un premier potentiel de référence (SN), notamment le point zéro de couplage,
- un circuit de réglage (30) cadencé du signal de sortie (S) du dispositif, agissant sur le condensateur de mesure et un condensateur de référence ($K_r$) à l'aide des signaux analogiques,

-- une première entrée du circuit de réglage étant placée sur le potentiel de service et une deuxième entrée du circuit de réglage sur le capteur de températures,

- un étage d'intégration (50) cadencé connecté au condensateur de mesure et au condensateur de référence,

-- donc la sortie est reliée à une troisième entrée du circuit de réglage et constitue la sortie du dispositif, et

- un générateur de cadence (61),

-- le signal de sortie (S) obéissant à l'équation suivante

$$S = \frac{U \cdot [a_0 + a_1 \cdot v_t + (a_2 + a_3 \cdot v_t) \cdot C_V]}{b_0 + b_1 \cdot C_V},$$

-- ou

$C_V$      signifie l'un des rapports de capacité suivants:

$C_{V1} = (C_m - C_r)/C_m,$

$C_{V2} = (C_m - C_r)/(C_m + C_r)$ ou

$C_{V3} = (C_m - C_r)/C_r;$

$C_m$      est la capacité du condensateur de mesure,

$C_r$      est la capacité du condensateur de référence,

$U;$      est tension de la source de tension de service,

$a_0$      est une valeur de réglage du point zéro;

$a_1$      est une valeur de réglage du coefficient de température du point zéro;

$a_2$      est une première valeur de réglage de la gamme de mesure,

$a_3$      est une valeur de réglage de la la gamme de mesure du coefficient de température,

$b_0$      est une deuxième valeur de réglage de la gamme de mesure,

$b_1$      est une valeur de réglage de la linéarisation, et

$v_t$      est le rapport de résistance variable avec la température du diviseur de tension variable avec la température.

2. Dispositif selon la revendication 1 comprenant un étage d'intégration (50), présentant un premier intégrateur (51) avec un condensateur ($K_u$) à inversion de pôles cadencée, et un deuxième intégrateur (52) cadencé placé sur la sortie du premier intégrateur.

3. Dispositif selon la revendication 1 comprenant un circuit de réglage (30) présentant

- un premier convertisseur numnerique/analogique (31) émettant un signal de conversion positif et négatif,

 -- dont l'entrée de référence est la première entrée du circuit de réglage;
 -- sur la première entrée de signal duquel est placée la valeur de réglage numérisée du point zéro, $A_0$,
 -- sur la deuxième entrée de signal duquel est placée la première valeur de réglage numérisée de la gamme de mesure, $A_2$, et
 -- dont la première et la deuxième entrées "enable" de signal sont commandées par le générateur de cadence (61),

- un deuxième convertisseur numérique/analogique (32) émettant un signal de conversion positif et négatif,

 -- dont l'entrée de référence est la deuxième entrée du circuit de réglage,
 -- sur la première entrée de signal duquel est placée la valeur de réglage numérisée du coefficient de température, $A_1$, du point zéro,
 -- sur la deuxième entrée de signal duquel est placée la valeur de réglage numérisée de la gamme du coefficient de température, $A_3$, et
 -- dont la première et la deuxième entrées "enable" de signal sont commandées par le générateur de cadence (61),

- un troisième convertisseur numérique/analogique (33) émettant un signal de conversion positif et négatif,

 -- dont l'entrée de référence est la troisième enctée du circuit de réglage,
 -- sur la première entrée de signal duquel est placée la deuxième valeur de réglage numérisée de la gamme de mesure, $B_0$,
 -- sur la deuxième entrée de signal duquel est placée la valeur de réglage numérisée de la linéarisation, $B_1$, et
 -- dont la première et la deuxième entrées "enable" de signal sont commandées par le générateur de cadence (61),

- un premier et un deuxième additionneurs (41, 42) avec respectivement une sortie et avec respectivement six entrées, dont

 -- la première ou la deuxième entrée du premier additionneur (41) reçoit le signal de conversion positif ou négatif du troisième convertisseur numérique/analogique (33) par l'intermédiaire d'un premier ou d'un deuxième contact (1, 2)
 -- la première ou la deuxième entrée du deuxième additionneur (42) reçoit le signal de conversion positif ou négatif du troisième convertisseur numérique/analogique (33) par l'intermédiaire d'un troisième ou d'un quatrième contact (3, 4),

-- a troisième ou la quatrième entrée du premier additionneur (41) reçoit le signal de conversion positif ou négatif du premier convertisseur numérique/analogique (31) par l'intermédiaire d'un cinquième ou d'un sixième contact (5, 6),

-- la troisième ou la quatrième entrée du deuxième additionneur (42) reçoit le signal de conversion positif ou négatif du premier convertisseur numérique/analogique (31) par l'intermédiare d'un septième ou d'un huitième contact (7, 8),

-- la cinquième ou la sixième entrée du premier additionneur (41) reçoit le signal de conversion positif ou négatif du deuxième convertisseur numérique/analogique (32) par l'intermédiaire d'un neuvième ou d'un dixième contact (9, 10) , et

-- la cinquième ou la sixième entrée du deuxième additionneur (42) reçoit le signal de conversion positif ou négatif du deuxième convertisseur numérique/analogique (32) par l'intermédiaire d'un onzième ou d'un douzième contact (11, 12),

--- la sortie du premier additionneur (41) étant placée par l'intermédiaire d'un 13ème contact (13) et la sortie du deuxième additionneur (42) par l'intermédiaire d'un 14ème contact (14) sur le condensateur de mesure ($K_m$), et

--- la sortie du premier additionneur (41) étant placée par l'intermédiaire d'un 15ème (15) contact et la sortie du deuxième additionneur (42) par l'intermédiaire d'un 16ème contact (16) sur le condensateur de référence ($K_r$), et

--- le raccordement respectif des condensateurs de mesure ou de référence disposé à l'opposé du contact étant placé sur le premier potentiel de référence (SN).

4. Dispssitif selon la revendication 2 pour le rapport de capacité $C_{V1} = (C_m - C_r)/C_m$ ou $C_{V2} = (C_m - C_r)/(C_m + C_r)$ avec un premier in:égrateur (51) comprenant:

- un premier amplificateur d'opérations (53),

-- dont l'entrée inverseur est placée sur le condensateur de mesure ($K_m$) par l'intermédiaire d'un 17ème contact (17) et sur le condensateur de référence ($K_r$) par l'intermédiaire d'un 18ème contact (18),

--- le point de jonction du 18ème contact et du condensateur de référence étant placé sur un deuxième potentiel de référence ($U_r$) par l'intermédiaire d'un 19ème contact (19),

-- dont l'entrée non inverseur est également placée sur le deuxième potentiel de référence ($U_r$),

-- dont l'entrée inverseur est reliée à la sortie par l'intermédiaire de trois branches parallèles,

--- dont la première branche parallèle est constituée par le couplage en série d'un 20ème et d'un 21èmes contacts (20, 21),

--- dont la deuxième branche parallèle est constituée par le couplage un série d'un 22ème et d'un 23ème contacts (22, 23), et

--- dont la troisième branche parallèle est constituée par un 24ème contact (24)

---- le condensateur ($K_u$) à inversion de polarité étant disposé entre le point de jonction des 20ème et 21ème contacts et le point de jonction des 22ème et 23ème contacts.

5. Dispositif selon la revendication 2 avec un deuxième intégrateur (52) comprenant:

- un deuxième amplificateur d'opérations (54),

-- dont l'entrée inverseur est placée sur le point de jonction des 20ème et 21ème contacts par l'intermédiaire d'un 25ème contact (25) et sur la sortie du dispositif par l'intermédiaire d'un condensateur fixe ($K_f$), et

-- dont l'entrée non inverseur est reliée au deuxième potentiel de référence ($U_r$).

6. Dispositif selon la revendication 4 pour le rapport de capacité $c_{V3} = (C_m - C_r)/C_r$ avec un 26èm contact (26) disposé entre le deuxième potentiel de référence ($U_r$) et le point de jonction du 17ème contact (17) et le condensateur de mesure ($K_m$).

**7.** Dispositif selon la revendication 2, comprenant un étage de lissage (55) placé sur la sortie de l'étage d'intégration (50).

**8.** Dispositif selon les revendications 1 à 7 comprenant un générateur de cadence (61) qui, pour la commande des 26 contacts (1 ... 26) et de l'entrée "enable" de signal respective des trois convertisseurs numériques/analogiques (31, 32, 33), génère des signaux cadencés ($T_1$ ... $T_{28}$) d'un niveau positi ou plus négatif (H,L) à cet effet à partir d'un rythme de base, le niveau respectif étant présent au moins pendant un huitième de la durée de période du rythme de base.

Fig. 2

Fig. 3

Fig. 4

Fig. 5

Fig 6

Fig. 7

28

Fig. 8

$$U_a = (I'_P - I'_N) \cdot R_{92}$$

$$U_a = I \cdot R_{92}$$

Fig. 9

Fig. 10

Fig. 4

Fig. 12

Fig. 13

Fig. 14

Fig. 16

Fig. 17

EP 0 711 976 B1

Fig. 18

EP 0 711 976 B1

38